(19) Europäisches Patentamt
European Patent Office
Office européen des brevets

(11) EP 3 541 861 B1

(12) # EUROPÄISCHE PATENTSCHRIFT

(45) Veröffentlichungstag und Bekanntmachung des Hinweises auf die Patenterteilung:
**09.09.2020 Patentblatt 2020/37**

(21) Anmeldenummer: **17797644.6**

(22) Anmeldetag: **14.11.2017**

(51) Int Cl.:
***C08G 65/18*** *(2006.01)* ***C08G 65/22*** *(2006.01)*
***C08G 65/326*** *(2006.01)* ***C08G 65/327*** *(2006.01)*
***C08G 65/329*** *(2006.01)* ***C08G 65/334*** *(2006.01)*
***C08G 65/335*** *(2006.01)* ***C08G 63/66*** *(2006.01)*
***B01F 17/00*** *(2006.01)*

(86) Internationale Anmeldenummer:
**PCT/EP2017/079151**

(87) Internationale Veröffentlichungsnummer:
**WO 2018/091443 (24.05.2018 Gazette 2018/21)**

(54) **POLYETHER AUF BASIS VON OXETANEN ZUR VERWENDUNG ALS NETZ- UND DISPERGIERMITTEL SOWIE DEREN HERSTELLUNG**

POLYETHER AUF BASIS VON OXETANEN ZUR VERWENDUNG ALS NETZ- UND DISPERGIERMITTEL SOWIE DEREN HERSTELLUNG

POLYÉTHER À BASE D'OXÉTANES POUR UTILISATION EN TANT QU'AGENTS MOUILLANTS ET DISPERSANTS, ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2016 EP 16198968**

(43) Veröffentlichungstag der Anmeldung:
**25.09.2019 Patentblatt 2019/39**

(73) Patentinhaber: **BYK-Chemie GmbH**
**46483 Wesel (DE)**

(72) Erfinder:
- **BESSEL, Michael**
**46483 Wesel (DE)**
- **JAUNKY, Guillaume, Wojciech**
**46483 Wesel (DE)**
- **PIESTERT, Frederik**
**46483 Wesel (DE)**
- **NAGEL, Carsten**
**46483 Wesel (DE)**
- **MEYER, Sandra, Sabrina**
**46483 Wesel (DE)**
- **LEVERING, Dennis**
**46483 Wesel (DE)**

(74) Vertreter: **Altana IP Department**
**Altana Management Services GmbH**
**Abelstraße 45**
**46483 Wesel (DE)**

(56) Entgegenhaltungen:
**CN-A- 106 084 203** **US-A- 3 859 253**

- **RYO SIBUTANI ET AL: "Fire-retardant solid polymer electrolyte films prepared from oxetane derivative with dimethyl phosphate estergroup", JOURNAL OF POWER SOURCES, 2012, Seiten 369-373, XP002769820,**
- **MASATOSHI MOTOI ET AL: "Oxetane Derivatives and Their Polymers for Designing Functional Polymers Containing a Soft, Somewhat Polar Polyether Network as a Polymer Support", BULLETIN OF THE CHEMICAL SOCIETY OF JAPAN, CHEMICAL SOCIETY OF JAPAN, TOKYO, JP , Bd. 62, Nr. 5 1. Januar 1989 (1989-01-01), Seiten 1572-1591, XP008158410, ISSN: 0009-2673, DOI: 10.1246/BCSJ.62.1572 Gefunden im Internet: URL:https://www.jstage.jst.go.jp/article/bcsj1926/62/5/62_5_1572/_pdf**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 541 861 B1

## Beschreibung

Die vorliegende Erfindung betrifft als Netz- und/oder Dispergiermittel geeignete Polyether auf Basis von Oxetanen, sowie deren Herstellung, deren Einsatz als oder in Netz- und/oder Dispergiermitteln und den Einsatz der Netz- und Dispergiermittel in verschiedenen Zusammensetzungen.

*Technologischer Hintergrund der Erfindung*

Um Feststoffe in einem flüssigen oder festen Medium, wie beispielsweise in Lacken, wässrigen oder organische Lösungsmittel aufweisenden Dispersionen oder Polymerformmassen, stabil und homogen zu verteilen, werden Netz- und/oder Dispergiermittel als Hilfsstoffe benötigt. Dafür müssen diese zwei unterschiedliche Funktionen erfüllen.

Erstens müssen sie mit der Feststoffoberfläche so in Wechselwirkung treten können, dass deren Benetzung erleichtert wird. Dies wird dadurch erreicht, dass die Netz- und Dispergiermittel bestimmte chemische Gruppen, sogenannte Haftgruppen, aufweisen. Beispiele für hydrophile Haftgruppen sind tertiäre Amino-Gruppen, protonierte oder quaternisierte Aminogruppen, Phosphorsäure-Gruppen, Carbonsäure-Gruppen, Sulfonsäure-Gruppen oder Amid-, Urethan- und/oder Harnstoff-Gruppen.

Für wässrige Dispersionen eignen sich als Haftgruppen beispielsweise hydrophobe Gruppen wie Alkylreste, Phenyl- oder Benzyl-Reste, wie sie beispielsweise in Adv. Mater. 1998, 10, 1215-1218 beschrieben sind.

Zweitens müssen Netz- und Dispergiermittel mit dem Dispergiermedium gut verträglich sein. Für organische Dispergiermedien sollten daher üblicherweise Dispergiermittel hydrophobe Reste wie beispielsweise längerkettige Alkyl-Reste oder Aryl-Reste aufweisen. Für wässrige Dispergiermedien sollten die Dispergiermittel wasserlösliche, hydrophile Reste, wie beispielsweise versalzte Carbonsäuren aufweisen.

Durch Polymerisation von Monomeren erhält man polymere Dispergiermittel, die gegebenenfalls nachträglich durch eine polymeranaloge Reaktion beispielsweise in den Seitenketten modifiziert werden können. Je nach Durchführung der Polymerisation sind die Monomeren in der Polymerkette statistisch oder alternierend, gradientenartig oder blockartig eingebaut. Bei einem statistischen oder alternierenden Aufbau der Polymerketten zeigen solche Dispergiermittel üblicherweise sehr gute feststoffbenetzende Eigenschaften, aber im Vergleich zu Netz- und Dispergiermitteln mit einem gradientenartigen oder blockartigen Aufbau eine schlechtere Stabilisierung der Feststoffdispersion. Dagegen kann der blockartige Aufbau von Dispergiermitteln mit sehr guten stabilisierenden Eigenschaften dazu führen, dass bei stark unterschiedlich polaren Blöcken es zu einer Mizellenbildung der Polymerketten kommt, die zu einem schlechteren Benetzungsverhalten der Feststoffoberfläche des zu dispergierenden Feststoffes führt.

Eine große Gruppe von Netz- und Dispergiermitteln basiert auf Polymeren aus ethylenisch ungesättigten Monomeren wie z. B. Acrylaten oder Methacrylaten, wobei die zum Einsatz kommenden Polymere sowohl einen statistischen, gradientenartigen oder blockartigen Aufbau aufweisen können. Sofern Polymere bzw. Copolymere einen statistischen Aufbau aufweisen, werden sie durch radikalische Polymerisation mit Hilfe von üblichen Startern hergestellt. Sofern sie einen gradientenartigen oder blockartigen Aufbau aufweisen, werden sie durch eine kontrollierte Polymerisation wie z. B. Atom Transfer Radical Polymerisation (ATRP), Group Transfer Polymerisation (GTP), Nitroxyl Mediated Polymerisation (NMP) oder einen Reversible Addition Fragmentation Chain Transfer Process (RAFT) hergestellt. Für die Herstellung von Copolymeren mit einem blockartigen oder gradientenartigen Aufbau nach kontrollierten Polymerisationstechnologien werden üblicherweise spezielle und damit teure Initiatoren oder Katalysatoren benötigt. Netz- und Dispergiermittel auf Basis solcher Polymere sind dem Fachmann aus der einschlägigen Literatur bekannt. Bereits aufgrund der unterschiedlichen chemischen Ausgangsstoffe sind diese Netz- und Dispergiermittel jedoch nicht mit den Polyethern der vorliegenden Erfindung verwandt.

Eine weitere bedeutende Gruppe von Netz- und Dispergiermitteln beruht auf Polyalkylenoxiden. Durch Polymerisation von Ethylenoxid zeigen diese Netz- und Dispergiermittel einen hydrophilen Charakter, während durch Copolymerisation von Propylen-, Butylen- oder Styrol-oxid hydrophobe Gruppen in das dem Netz- und Dispergiermittel zu Grunde liegende Polymere eingearbeitet werden können. Da es nur eine geringe Auswahl an kommerziell verfügbaren Alkylenoxiden gibt und bei diesen Polymeren als funktionelle Gruppe für Modifikationen nur endständige OH-Gruppen in Frage kommen, gibt es nur eine eingeschränkte Möglichkeit zur Modifikation der Polymeren und damit für deren Einsatz als Netz- und Dispergiermittel.

Als Lösung für die Nachteile der vorgenannten reinen Polyalkylenoxide werden in der US 2011/257326 A1 oxetangruppenfreie Polyglycidyletherblockcopolymere als Dispergiermittel vorgeschlagen, die mittels anionischer Ringöffnungspolymerisation erhalten werden.

Trotz der Verwendung von aus obigem Stand der Technik bekannten Styroloxid-Alkylenoxid-Blockcopolymeren und Polyglycidyletherblockcopolymeren besteht weiterhin der dringende Bedarf an verbesserten Netz- und Dispergiermitteln, speziell an einer verbesserten Verträglichkeit von Pigmentkonzentraten, die mit diesen Netz-und Dispergiermitteln hergestellt werden, mit unterschiedlichen Auflackbindemitteln. Dies gilt umso mehr, wenn diese für eine Vielzahl von Anwendungsgebieten eingesetzt werden sollen.

Strukturell zu den Spezies der vorliegenden Erfindung ähnliche Verbindungen sind in der US 8,258,189 B2 für den Kosmetikbereich offenbart. Die darin beschriebenen Verbindungen weisen jedoch zwingend und ausschließlich Hydroxylgruppen als Endgruppen auf, die keiner weiteren Umsetzung beispielsweise zu Säuregruppen oder deren Salzen unterzogen wurden. Derartige in der US 8,258,189 B2 beschriebene Verbindungen sind jedoch insbesondere in sogenannten "Sheet-Molding-Compounds" (SMC) und "Bulk-Molding-Compounds" (BMC) nicht wirksam. Zu den vielfältigen Anwendungsgebieten zählen unter anderem auch pigmentierte und/oder Füllstoffe enthaltende Kunstharze beziehungsweise Formmassen, worunter auch vorgenannte SMC und BMC fallen, die häufig und insbesondere aus Verstärkungsfasern und Füllstoffe enthaltenden ungesättigten Polyesterharzen bestehen. Hierfür geeignete, aber in ihrer Wirksamkeit und Verträglichkeit verbesserbare Netz- und Dispergiermittel auf der Basis phosphatierter oxetangruppenfreier Polyether-Polyester sind beispielsweise aus der US 5,130,463 bekannt.

Eine strukturelle Ähnlichkeit zu den Spezies der vorliegenden Erfindung weisen auch die in der US 2013/0289195 A1 beschriebenen Spezies auf, die zwingend Carboxylatgruppen oder deren Versalzungsprodukte enthalten und die über eine endständige ethylenisch ungesättigte funktionelle Gruppe wie beispielsweise eine Acrylat-, Methacrylat-, Vinyl- oder Allylgruppe verfügen und keine Sulfonylierung oder Phosphorylierung von Hydroxylgruppen aufweisen. Deren Wirkung beruht unter anderem auf der direkten Anbindung der ethylenisch ungesättigten Gruppe an Bestandteile des Dispersionsmediums. Polyether auf Basis von Polyoxetanen mit quaternisierten Aminogruppen sind ebenfalls in dem Dokument CN-A-106084203 offenbart.

Aufgabe der vorliegenden Erfindung war es daher, Mittel zur Phasenvermittlung zwischen fest und flüssig zur Verfügung zu stellen, das heißt Netz- und/oder Dispergiermittel, die sowohl in hydrophoben als auch in hydrophilen Medien zu entsprechend lagerstabilen Systemen mit einer verbesserten Verträglichkeit mit unterschiedlichen Auflackbindemitteln und mit breiten Anwendungsmöglichkeiten führen. Besonders herauszustellen ist auch die Aufgabe Netz- und Dispergiermittel zu finden, welche die Viskositätsreduktion von Feststoffen, insbesondere anorganischen Pigmenten und Füllstoffen, wie insbesondere Aluminiumtrihydroxid (ATH), Calciumcarbonat und Bariumsulfat, in reaktiven High-Solid- oder lösemittelfreien Formulierungen, wie beispielsweise Styrol-haltigen Kunststoff-Massen sowie SMC oder BMC, gewährleistet.

Die obigen Aufgaben konnten durch Bereitstellung von Polyethern der folgenden allgemeinen Formel (I) beziehungsweise Netz- und/oder Dispergiermitteln, die aus diesen bestehen oder diese enthalten, gelöst werden:

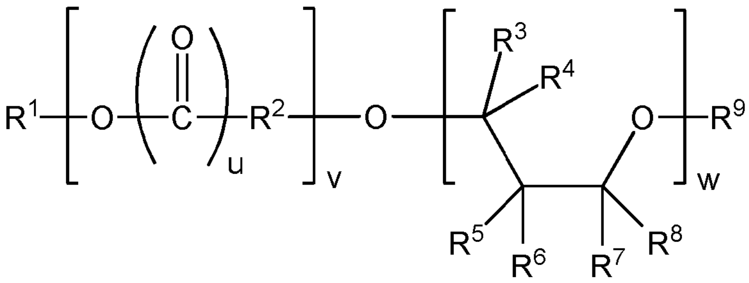

(I)

worin

| | |
|---|---|
| u | für 0 oder 1 steht |
| v | für 1 bis 60, vorzugsweise 2 bis 45, besonders bevorzugt 6 bis 40 steht, |
| w | für 1 bis 20, vorzugsweise 1 bis 10, besonders bevorzugt 1 bis 6 steht, |
| $R^1$ | für einen einwertigen organischen Rest mit 1 bis 100 Kohlenstoffatomen steht, |
| $R^2$ | für einen zweiwertigen organischen Rest steht, und der |
| wenn | u = 0 ist für $CHR^{2a}CHR^{2b}$ steht, wobei |
| $R^{2a}$ und $R^{2b}$ | unabhängig voneinander für<br>Wasserstoff, oder<br>einwertige organische Reste gewählt aus der Gruppe bestehend aus aliphatischen Resten mit 1 bis 8 Kohlenstoffatomen, aromatischen Resten mit 6 bis 8 Kohlenstoffatomen, oder araliphatischen Resten mit 7 bis 10 Kohlenstoffatomen stehen; und der |
| wenn | u = 1 ist für einen aliphatischen Rest mit 2 bis 24 Kohlenstoffatomen |
| steht; $R^3$, $R^4$, $R^7$ und $R^8$ | unabhängig voneinander für<br>Wasserstoff, oder<br>einwertige organische Reste stehen und gewählt werden aus der Gruppe bestehend aus aliphatischen Resten mit 1 bis 8 Kohlenstoffatomen, aromatischen Resten mit 6 bis 8 Koh- |

lenstoffatomen, oder araliphatischen Resten mit 7 bis 10 Kohlenstoffatomen,

$R^5$ für einen Rest $R^{5a}$ oder $R^{5b}$ steht, und

$R^{5a}$ für einen einwertigen organischen Rest steht und der gewählt ist aus der Gruppe bestehend aus aliphatischen Resten mit 1 bis 20 Kohlenstoffatomen, aromatischen Resten mit 6 bis 12 Kohlenstoffatomen, araliphatischen Resten mit 7 bis 24 Kohlenstoffatomen,

$R^{5b}$ für einen Rest $CH_2$-O-$R^{5c}$ steht, worin $R^{5c}$ für Wasserstoff oder einen einwertigen ein oder mehrere Hydroxylgruppen enthaltenden organischen Rest steht und der gewählt ist aus der Gruppe bestehend aus

aliphatischen Resten mit 1 bis 24 Kohlenstoffatomen, aromatischen Resten mit 6 bis 14 Kohlenstoffatomen, und araliphatischen Resten mit 7 bis 18 Kohlenstoffatomen,

$R^6$ für Wasserstoff oder einen Rest $R^{5a}$ steht

$R^9$ wie $R^{5c}$ definiert ist und unabhängig von $R^{5c}$ gewählt ist; und

wobei

(a) die Reste $R^1$, $R^2$, $R^3$, $R^4$, $R^{5a}$, $R^6$, $R^7$ und $R^8$ frei sind von Carboxy-, Hydroxy-, Thiol-, Imino- sowie primären und sekundären Aminogruppen,

(b) 10 bis 100 mol-%, bevorzugt 20% bis 100 mol-%, besonders bevorzugt 30% bis 100 mol-% der über die obigen Reste $R^{5b}$ und $R^9$ eingeführten oder durch Abspaltung von hydrolytisch abspaltbaren Resten entstandenen Hydroxylgruppen durch Reste OT ersetzt sind, die gewählt sind aus der Gruppe bestehend aus

Resten $-O-P(O)(OH)_{2-x}(O^{\ominus}Z^{\oplus})_x$, worin x für 0, 1 oder 2 steht,

Resten $-O-S(O_2)(OH)_{1-y}(O^{\ominus}Z^{\oplus})_y$, worin y für 0 oder 1 steht, und

Resten $-O-(C=O)_s-(NH)_t-T^a$, worin s für 0 oder 1 und t für 0 oder 1 steht und für den Fall, dass s = 0 auch t = 0 gilt, und worin $T^a$ für einen einwertigen organischen Rest mit 1 bis 100 Kohlenstoffatomen steht, der gegebenenfalls ein oder mehrere der folgenden Reste COOH,
$-COO^{\ominus}Z^{\oplus}$,
$-O-P(O)(OH)_{2-x}(O^{\ominus}Z^{\oplus})_x$ und
$-O-S(O_2)(OH)_{1-y}(O^{\ominus}Z^{\oplus})_y$ enthält,

und die obigen Reste $Z^{\oplus}$ unabhängig voneinander für Alkalimetallkationen, ein Ammoniumion oder protonierte oder quaternisierte Amine stehen, und

(c) mindestens einer der Reste OT mindestens einen der Reste $-O-P(O)(OH)_{2-x}(O^{\ominus}Z^{\oplus})_x$ oder $-O-S(O_2)(OH)_{1-y}(O^{\ominus}Z^{\oplus})_y$ enthält oder aus diesem besteht.

Der Begriff "organischer Rest" steht hierin für einen aliphatischen, aromatischen oder araliphatischen Rest.

Der Begriff "aliphatischer Rest" bedeutet hierin - in Übereinstimmung mit der IUPAC-Nomenklatur (zum Stichwort: "aliphatic compounds", Pure & Appl. Chem., 67 (8/9) (1995), 1307-1375, 1313) -, dass es sich um einen acyclischen oder cyclischen, gesättigten oder ungesättigten, nicht-aromatischen Rest einer Kohlenstoffverbindung handelt. Unter den Begriff des aliphatischen Rests fallen somit auch die cycloaliphatischen Reste (auch als alicyclische Reste bezeichnet). Für die Reste, für die Carboxygruppen (COOH-Gruppen) nicht explizit ausgeschlossen sind, könnte es sich bei einem aliphatischen Rest prinzipiell auch um eine Carboxygruppe handelt, da es sich um den nichtaromatischen Rest einer Kohlenstoffverbindung, nämlich der Ameisensäure handelt. Ein aliphatischer Rest enthält neben Kohlenstoffatomen üblicherweise auch Wasserstoffatome. Darüber hinaus darf ein aliphatischer Rest auch Heteroatome enthalten, wobei es sich in letzterem Fall um einen sogenannten heteroaliphatischen Rest handelt.

Der Begriff "aromatischer Rest" bedeutet hierin - in Übereinstimmung mit der üblichen Bedeutung -, dass es sich um den Rest eines Ringsystems einer Kohlenstoffverbindung handelt, der nach der Hückelregel in konjugierten Doppelbindungen, freien Elektronenpaaren oder unbesetzten p-Orbitalen eine Anzahl von 4n+2 (mit n≥ 0) an delokalisierten Elektronen enthält. Ein aromatischer Rest enthält üblicherweise neben Kohlenstoffatomen auch Wasserstoffatome. Darüber hinaus darf ein aromatischer Rest auch Heteroatome enthalten, wobei es sich im letzteren Fall um einen sogenannten heteroaromatischen Rest handelt. In Heteroaromaten bevorzugte Heteroatome sind beispielsweise Stickstoffatome und/oder Sauerstoffatome.

Der Begriff "araliphatischer Rest" bedeutet hierin einen aliphatischen Rest, der mit einem oder mehreren aromatischen Resten substituiert ist.

Der Begriff "Kohlenwasserstoff-Rest" steht hierin entsprechend der IUPAC-Nomenklatur für einen Rest, der lediglich Kohlenstoffatome und Wasserstoffatome enthält. In den Fällen, in welchen ein solcher Rest zusätzlich ein oder mehrere Heteroatome enthalten darf (beispielsweise Ethersauerstoffatome) oder mit einem oder mehreren heteroatomgruppenhaltigen Resten substituiert ist (beispielsweise Hydroxylgruppen) wird ausdrücklich darauf hingewiesen.

*Die Reste $R^1$*

Vorzugsweise steht der einwertige organische Rest $R^1$, der frei ist von Carboxy-, Hydroxy-, Thiol-, Imino- sowie primären und sekundären Aminogruppen, für einen organischen Rest mit 1 bis 80 oder 1 bis 50, besonders bevorzugt 1 bis 20 und ganz besonders bevorzugt 1 bis 16 Kohlenstoffatomen noch bevorzugter 1 bis 12 Kohlenstoffatomen, einen aromatischen Rest mit 6 bis 30 oder 6 bis 20, besonders bevorzugt 1 bis 16 und ganz besonders bevorzugt 1 bis 12 Kohlenstoffatomen, oder einen araliphatischen Rest mit 7 bis 40 oder 7 bis 30, besonders bevorzugt 7 bis 20 und ganz besonders bevorzugt 7 bis 12 Kohlenstoffatomen. Soweit die genannten Reste die obigen Bedingungen erfüllen, dürfen diese definitionsgemäß auch Heteroatome wie beispielsweise Polyoxazolin-Reste enthalten.

Handelt es sich beim einwertigen organischen Rest $R^1$ um einen aliphatischen Rest, so steht dieser vorzugsweise für einen verzweigten oder unverzweigten, gesättigten Kohlenwasserstoffrest mit 1 bis 40, besonders bevorzugt 1 bis 20 und ganz besonders bevorzugt 1 bis 10 Kohlenstoffatomen oder es handelt sich um einen verzweigten oder unverzweigten, ungesättigten Kohlenwasserstoffrest mit 2 bis 40, besonders bevorzugt 2 bis 20 und ganz besonders bevorzugt 2 bis 10 Kohlenstoffatomen, wobei verzweigte aliphatische Reste naturgemäß mindestens 3 Kohlenstoffatome enthalten.

Es können als aliphatische ethylenisch ungesättigte Reste $R^1$ auch Allyl- oder Vinylgruppen enthaltende Reste eingesetzt werden. Eine Untergruppe der letztgenannten Reste sind beispielsweise Reste $R^1$, die Acryl- oder Methacryl-Reste enthalten, wie beispielsweise die Reste $H_2C{=}CH\text{-}(CO)\text{-}O\text{-}CH_2CH_2$ oder $H_2C{=}C(CH_3)\text{-}(CO)\text{-}O\text{-}CH_2CH_2$. Das Einbringen derartiger Reste ermöglicht beispielsweise den festen Einbau der Polyether der Formel (I) in strahlungshärtenden Zusammensetzungen, insbesondere strahlungshärtbaren Beschichtungsmittelzusammensetzungen.

Handelt es sich beim einwertigen organischen Rest $R^1$ um einen aromatischen Rest, so steht dieser vorzugsweise für einen Kohlenwasserstoffrest mit 6 bis 30 oder 6 bis 20, besonders bevorzugt 6 bis 16 und ganz besonders bevorzugt 6 bis 10 Kohlenstoffatomen. Der aromatische Rest darf hierbei als Substituenten aliphatische Kohlenwasserstoffreste tragen, wobei deren Kohlenstoffzahl in der vorgenannten Anzahl an Kohlenstoffatomen des aromatischen Rests enthalten ist. So ist beispielsweise ein Methylphenyl-Rest ein aromatischer Rest mit 7 Kohlenstoffatomen.

Handelt es sich beim einwertigen organischen Rest $R^1$ um einen araliphatischen Rest, so steht dieser vorzugsweise für einen Kohlenwasserstoffrest mit 7 bis 40 oder 7 bis 30, besonders bevorzugt 7 bis 20 und ganz besonders bevorzugt 7 bis 12 Kohlenstoffatomen. Ein Phenylmethyl-Rest, auch Benzylrest genannt, ist beispielsweise ein araliphatischer Rest mit 7 Kohlenstoffatomen. Der Rest darf hierbei als Substituenten weitere aliphatische Kohlenwasserstoffreste beispielsweise am aromatischen Ring tragen, wobei deren Kohlenstoffzahl in der vorgenannten Anzahl an Kohlenstoffatomen des araliphatischen Rests enthalten ist. So ist beispielsweise ein p-Methylbenzyl-Rest ein araliphatischer Rest mit 8 Kohlenstoffatomen.

Im Rahmen der vorliegenden Erfindung sind als Reste $R^1$ insbesondere die vorgenannten aliphatischen Reste und ganz besonders die vorgenannten bevorzugten, besonders bevorzugten und ganz besonders bevorzugten aliphatischen Kohlenwasserstoffreste in der allgemeinen Struktur der Formel (I) verwirklicht. Besonders bevorzugt sind diese heteroatomfrei.

Für die Reste $R^1$ gilt allgemein, dass diese polymerisierbare Kohlenstoff-Kohlenstoff-Doppelbindungen oder polymerisierbare Kohlenstoff-Kohlenstoff-Dreifachbindungen aufweisen können, vorzugsweise enthalten die Reste $R^1$ jedoch keine polymerisierbaren Kohlenstoff-Kohlenstoff-Doppelbindungen oder polymerisierbare Kohlenstoff-Kohlenstoff-Dreifachbindungen.

*Die Reste $R^2$ (für u = 0)*

Wenn u = 0 ist, steht $R^2$ für einen zweiwertigen organischen Rest der Formel $CHR^{2a}CHR^{2b}$. Vorzugsweise steht hierin wenigstens einer der Reste $R^{2a}$ und $R^{2b}$ für Wasserstoff.

Stehen, wenn u = 0 ist, beide Reste $R^{2a}$ und $R^{2b}$ für Wasserstoff, so handelt es sich beim Rest $CHR^{2a}CHR^{2b}$ um einen Ethylenrest $CH_2CH_2$.

Steht, wenn u = 0 ist, hingegen nur einer der Reste $R^{2a}$ und $R^{2b}$ für Wasserstoff, so steht der zweite, nicht für Wasserstoff stehende Rest vorzugsweise für einen verzweigten oder unverzweigten, gesättigten oder ungesättigten, bevorzugt gesättigten, aliphatischen Rest mit 1 bis 20, vorzugsweise 1 bis 16, besonders bevorzugt 1 bis 10 oder 1 bis 9 Kohlenstoffatomen, einen aromatischen Rest mit 6 bis 16, besonders bevorzugt 6 bis 12 und ganz besonders bevorzugt 6 bis 10 Kohlenstoffatomen, oder einen araliphatischen Rest mit 7 bis 18, bevorzugt 7 bis 14 und besonders bevorzugt 7 bis 12 Kohlenstoffatomen.

Wenn u = 0 ist, und genau einer der Reste $R^{2a}$ und $R^{2b}$ für Wasserstoff steht, dann sind unter den vorgenannten aliphatischen Resten solche bevorzugt, bei welchen es sich um vorzugsweise gesättigte Kohlenwasserstoffreste mit 1 bis 20, vorzugsweise 1 bis 16, besonders bevorzugt 1 bis 10 oder 1 bis 9 Kohlenstoffatomen handelt. Steht genau einer der Reste $R^{2a}$ oder $R^{2b}$ für Wasserstoff und der andere für eine Methylgruppe, so handelt es sich beim Rest $CHR^{2a}CHR^{2b}$ um einen i-Propylenrest.

Die aliphatischen, vorzugsweise gesättigten Kohlenwasserstoffreste können auch ein oder mehrere Ethersauerstoffatome -O- und oder eine oder mehrere Carbonsäureestergruppen -O-C(=O)- enthalten. Andere Heteroatome, insbesondere Stickstoffatome, sind in diesen Resten vorzugsweise nicht enthalten. Sind Ethersauerstoffatome oder Carbonsäureestergruppen enthalten, so ist im entsprechenden Rest vorzugsweise genau ein Ethersauerstoffatom oder genau eine Carbonsäureestergruppe enthalten. Im Falle einer Carbonsäureestergruppe zählt deren Kohlenstoffatom zur Gesamtzahl der Kohlenstoffatome des Rests. Besonders bevorzugt handelt es sich bei den vorgenannten bevorzugten aliphatischen Resten $R^{2a}$ oder $R^{2b}$ um Kohlenwasserstoffreste, die kein Ethersauerstoffatom und keine Carbonsäureestergruppe enthalten, oder die genau ein Ethersauerstoffatom oder eine Carbonsäureestergruppe enthalten.

Handelt es sich bei den aliphatischen, aromatischen oder araliphatischen Resten $R^{2a}$ oder $R^{2b}$ um solche mit genau einem Ethersauerstoffatom oder genau einer Carbonsäureestergruppe, so besitzen diese Reste besonders bevorzugt folgende Formel $CH_2\text{-}O[CO]_i\text{-}R^{2c}$, worin i für 0 oder 1 steht und $R^{2c}$ für einen Kohlenwasserstoff-Rest mit 1 bis 18, vorzugsweise 1 bis 14 und besonders bevorzugt 1 bis 10 Kohlenstoffatomen steht. Ist i = 0, so enthält der Rest $R^{2c}$ genau ein Ethersauerstoffatom, ist i = 1, so enthält der Rest $R^{2c}$ genau eine Carbonsäureestergruppe. Ganz besonders bevorzugt ist in diesen Gruppen i = 0. Wenn der Kohlenwasserstoffrest $R^{2c}$ ein aliphatischer Rest ist, so ist dieser unverzweigt oder verzweigt. Ist der Kohlenwasserstoffrest $R^{2c}$ aliphatisch unverzweigt, so enthält er vorzugsweise 1 bis 19, besonders bevorzugt 1 bis 15 oder ganz besonders bevorzugt 1 bis 9 oder 1 bis 8 Kohlenstoffatome. Ist der Rest $R^{2c}$ aliphatisch verzweigt, so enthält er vorzugsweise 3 bis 19, besonders bevorzugt 3 bis 15 oder ganz besonders bevorzugt 3 bis 9 oder 4 bis 8 Kohlenstoffatome.

Wenn der Kohlenwasserstoffrest $R^{2c}$ ein aromatischer Rest ist, so enthält er vorzugsweise 6 bis 14, besonders bevorzugt 6 bis 12 oder ganz besonders bevorzugt 6 bis 10 Kohlenstoffatome.

Wenn der Kohlenwasserstoffrest $R^{2c}$ ein araliphatischer Rest ist, so enthält er vorzugsweise 7 bis 16, besonders bevorzugt 7 bis 12 oder ganz besonders bevorzugt 7 bis 10 Kohlenstoffatome.

Sind in Formel (I) für u = 0 unterschiedliche Arten an Resten $CHR^{2a}CHR^{2b}$ vertreten, so können diese in Blöcken, statistisch oder gradientenartig angeordnet sein. Ist beispielsweise v = 20 und gilt beispielsweise für 10 der 20 Reste $CHR^{2a}CHR^{2b}$, dass $R^{2a} = R^{2b} = H$ und für die restlichen 10 der 20 Reste $CHR^{2a}CHR^{2b}$, dass $R^{2a} = H$ und $R^{2b} = CH_3$ ist, dann handelt es sich beim Rest $(O\text{-}R^2)_{20}$ um einen Ethylenoxid/Propylenoxid-Rest mit jeweils 10 Ethylenoxid- und 10 PropylenoxidEinheiten, wobei diese 20 Einheiten in zwei oder mehr Blöcken, statistisch oder gradientenartig angeordnet sein können.

*Die Reste $R^2$ (für u = 1)*

Wenn u = 1 ist steht $R^2$ vorzugsweise für einen verzweigten oder unverzweigten, gesättigten oder ungesättigten, bevorzugt gesättigten, aliphatischen Kohlenwasserstoff-Rest mit 2 bis 24, besonders bevorzugt 2 bis 16, bevorzugter 2 bis 8 und ganz besonders bevorzugt 4 oder 5 Kohlenstoffatomen.

Sind in Formel (I) für u = 1 unterschiedliche Arten an Resten $R^2$ vertreten, so können diese in Blöcken, statistisch oder gradientenartig angeordnet sein.

*Die Reste $R^2$, wenn u = 0 und u = 1 gleichzeitig in Formel (I) verwirklicht sind*

Gilt gleichzeitig für einen Teil der v Reste $[O\text{-}(C{=}O)_u\text{-}R^2]$, dass u = 0 ist und für die anderen der v Reste $[O\text{-}(C{=}O)_u\text{-}R^2]$, dass u = 1 ist, so gelten die obigen Ausführungen gleichermaßen. Zusätzlich gilt, dass auch die $[O\text{-}R^2]$- und $[O\text{-}(C{=}O)\text{-}R^2]$-Reste in Blöcken, statistisch oder gradientenartig angeordnet sein. Bevorzugt ist jedoch, dass die $[O\text{-}R^2]$-Reste und $[O\text{-}(C{=}O)\text{-}R^2]$-Reste in getrennten Blöcken vorliegen. Innerhalb dieser bevorzugten Anordnung liegen die $[O\text{-}R^2]$-Rest in ihrem Block oder ihren Blöcken ebenfalls blockartig oder statistisch vor und die $[O\text{-}(C{=}O)\text{-}R^2]$-Reste liegen innerhalb ihrem Block oder ihren Blöcken vorzugsweise blockartig oder statistisch vor. Bevorzugt ist mindestens einer der Blöcke für die u = 1 gilt an den Rest $R^1$ gebunden.

Allgemein gilt für die Reste $[O\text{-}(C{=}O)_u\text{-}R^2]$, dass es bevorzugt ist, wenn u = 0 ist.

*Die Reste $R^3$, $R^4$, $R^7$ und $R^8$*

Die Reste $R^3$, $R^4$, $R^6$, $R^7$ und $R^8$ stehen unabhängig voneinander für Wasserstoff oder einwertige organische Reste, wobei letztere gewählt sind aus der Gruppe bestehend aus aliphatischen Resten mit 1 bis 8 Kohlenstoffatomen, aromatischen Resten mit 6 bis 8 Kohlenstoffatomen, oder araliphatischen Resten mit 7 bis 10 Kohlenstoffatomen.

Besonders bevorzugt sind stehen die Reste $R^3$, $R^4$, $R^7$ und $R^8$ für Wasserstoff oder einen unverzweigten Alkylrest mit 1 bis 8 Kohlenstoffatomen oder einen verzweigten Alkylrest mit 3 bis 8 Kohlenstoffatomen. Ganz besonders bevorzugt stehen die Reste $R^3$, $R^4$, $R^7$ und $R^8$ für Wasserstoff und/oder Methyl, am bevorzugtesten für Wasserstoff.

*Der Rest $R^5$*

Der Rest $R^5$ steht für einen Rest $R^{5a}$ oder $R^{5b}$.

Hierin steht $R^{5a}$ für einen einwertigen organischen Rest der frei ist von Carboxy-, Hydroxy-, Thiol-, Imino- sowie primären und sekundären Aminogruppen und der vorzugsweise gewählt ist aus der Gruppe bestehend aus aliphatischen Kohlenwasserstoffresten mit 1 bis 20 Kohlenstoffatomen, aromatischen Kohlenwasserstoffresten mit 6 bis 12 Kohlenstoffatomen und araliphatischen Kohlenwasserstoffresten mit 7 bis 24 Kohlenstoffatomen, wobei alle vorstehend genannten Kohlenwasserstoffreste ein Ethersauerstoffatom enthalten dürfen. Wasserstoffatome dürfen in den Resten durch Halogenatome, bevorzugt Chloratome substituiert sein, wobei, sofern eine entsprechende Substituierung vorliegt, monochlorsubstituierte Reste bevorzugt sind.

Besonders bevorzugt Steht $R^{5a}$ für einen verzweigten oder unverzweigten Rest $CH_2$-O-($C_{1-10}$-Alkyl) oder einen Rest $CH_2$-O-Phenyl.

Enthält der Rest $R^{5a}$ ein Ethersauerstoffatom, so steht dieser vorzugsweise für einen Rest $CH_2$-O-$R^{5d}$, worin $R^{5d}$ für einen einwertigen organischen Rest der frei ist von Ethersauerstoffatomen und Carboxy-, Hydroxy-, Thiol-, Imino- sowie primären und sekundären Aminogruppen und der vorzugsweise gewählt ist aus der Gruppe bestehend aus aliphatischen Kohlenwasserstoffresten mit 1 bis 8 Kohlenstoffatomen, aromatischen Kohlenwasserstoffresten mit 6 bis 8 Kohlenstoffatomen, araliphatischen Kohlenwasserstoffresten mit 7 bis 20 Kohlenstoffatomen. Der Rest $R^{5d}$ kann jedoch beispielsweise über eine diesem Rest $R^{5d}$ zuzuordnende Gruppe C=O an das Sauerstoffatom im Rest $CH_2$-O-$R^{5d}$ gebunden sein. Es kann sich beim Rest $R^{5d}$ beispielsweise auch um einen Rest -S(=O)$_2$-Phenyl handeln.

Der Rest $R^{5b}$ steht für einen Rest $CH_2$-O-$R^{5c}$, worin $R^{5c}$ für Wasserstoff oder einen einwertigen ein oder mehrere Hydroxylgruppen enthaltenden organischen Rest steht, der vorzugsweise ein oder mehrere Ethersauerstoffatome enthält, und gewählt ist aus der Gruppe bestehend aus aliphatischen Resten mit 1 bis 24 Kohlenstoffatomen, aromatischen Resten mit 6 bis 14 Kohlenstoffatomen, und araliphatischen Resten mit 7 bis 18 Kohlenstoffatomen.

Handelt es sich beim Rest $R^{5b}$ um einen einwertigen, ein oder mehrere Hydroxylgruppen und ein oder mehrere Ethersauerstoffatome enthaltenden Rest, so lässt sich dieser Rest ausgehend von einem Rest $R^{5b}$ = $CH_2$-O-$R^{5c}$ mit $R^{5c}$ = H, also einem Rest $CH_2$-OH beispielsweise durch Ringöffnungspolymerisation von Oxiranen, Lactonen, Lactiden oder Oxetanen, insbesondere auch Hydroxyoxetanen oder durch Kondensation von Hydroxycarbonsäuren aufbauen. Hierfür geeignete Spezies sind weiter unten unter den allgemeinen Formeln (IV), (V), (Va), (Vb) und (VII) aufgeführt.

Steht $R^{5c}$ für Wasserstoff, so ist es bevorzugt, wenn dies für höchstens 50 % der v+w Einheiten, besonders bevorzugt 1 bis 30 % und ganz besonders bevorzugt 1 bis 20 % der Einheiten v+w gilt. Mit anderen Worten, wenn beispielsweise v + w = 4 + 12 = 16, dann sollte in vorzugsweise nicht mehr als 8 Einheiten der 12 "w-Einheiten" $R^{5c}$ für Wasserstoff stehen.

Unter den bevorzugten Resten $R^{5b}$ sind solche bevorzugt, die und ein oder mehrere Hydroxylgruppen und/oder die ein oder mehrere Ethersauerstoffatome enthalten. Unter diesen sind wiederum solche bevorzugt, deren Ethersauerstoffatom(e) durch 2 oder 3 Kohlenstoffatome in kürzester Kette mit einem weiteren Ethersauerstoffatom oder einer OH-Gruppe verbunden sind, das heißt die unabhängig von möglichen Substituenten oder Wasserstoffatomen an den Kohlenstoffatomen folgende Motive aufweisen: -O*-C-C-O**- oder -O*-C-C-C-O**- Hierin steht das mit einem * gekennzeichnete Sauerstoffatom für das mindestens eine Ethersauerstoffatom und das mit ** gekennzeichnete Sauerstoffatom für ein weiteres Ethersauerstoffatom oder das Sauerstoffatom in einer OH-Gruppe. Werden die OH-Gruppen teilweise oder vollständig in Reste OT überführt, so gilt die vorstehende Aussage für OH-Gruppen auch für Reste OT.

Ganz besonders bevorzugt steht der ein oder mehrere Ethersauerstoffatome und ein oder mehrere Hydroxylgruppen enthaltende organische Rest $R^{5c}$ für einen Rest der allgemeinen Formel (II):

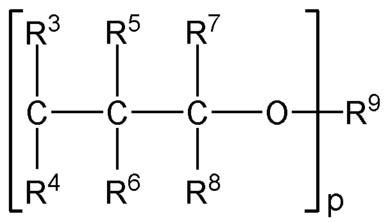

(II)

worin $R^3$, $R^4$, $R^5$, $R^6$, $R^7$, $R^8$ und $R^9$ unabhängig voneinander wie oben beziehungsweise unten definiert sind, und p für

1 bis 10, vorzugsweise 1 bis 6 und besonders bevorzugt 1 bis 3 steht. Bevorzugt steht w + p für einen Wert von ≤ 30, besonders bevorzugt für einen Wert von 1 bis 20, ganz besonders bevorzugt für einen Wert von 1 bis 10 und noch besser für einen Wert von 1 bis 8, 1 bis 6 oder 1 bis 5. Solche Reste lassen sich durch Addition von Oxiranen der weiter unten angegebenen allgemeinen Formel (VII) an einen Hydroxylrest, insbesondere den Hydroxylrest in der Formel $CH_2$-O-$R^{5c}$ mit $R^{5c}$ = H, also $CH_2$-OH einführen.

*Der Rest $R^6$*

Wenn der Rest $R^5$ für einen Rest $R^{5b}$ steht, so ist der Rest $R^6$ vorzugsweise wie der Rest $R^{5a}$ definiert oder er steht für Wasserstoff. Besonders bevorzugt steht der Rest $R^6$ für einen Alkylrest mit 1 bis 10, ganz besonders bevorzugt 2 bis 6 und noch besser 2 bis 4, insbesondere 2 Kohlenstoffatomen.

*Verbundene Reste $R^5$ und $R^6$*

Es ist auch möglich, dass die Reste $R^5$ und $R^6$ gemeinsam durch Ringschluss verbunden sind. Solche Ringe enthalten vorzugsweise 4 oder 5 Kohlenstoffatome und gegebenenfalls ein N-alkyliertes Stickstoffatom.

*Die Reste $R^9$ in den allgemeinen Formeln (I) und (II)*

Der Rest $R^9$ steht für Wasserstoff, oder einen einwertigen organischen Rest gewählt aus der Gruppe bestehend aus aliphatischen Resten mit 1 bis 24 Kohlenstoffatomen, aromatischen Resten mit 6 bis 14 Kohlenstoffatomen, araliphatischen Resten mit 7 bis 18 Kohlenstoffatomen. Hydroxylgruppen im Rest $R^9$ werden vorzugsweise ganz oder teilweise in Reste OT umgewandelt, die gewählt sind aus der Gruppe bestehend aus $-O-P(O)(OH)_{2-x}(O^{\ominus}Z^{\oplus})_x$, $-O-S(O_2)(OH)_{1-y}(O^{\ominus}Z^{\oplus})_y$, worin x für 0, 1 oder 2 steht und y für 0 oder 1 steht, und $-O-(C=O)_s-(NH)_t-T^a$, worin s für 0 oder 1 und t für 0 oder 1 steht und für den Fall dass s = 0 auch t = 0 gilt, und worin $T^a$ für einen einwertigen organischen Rest mit 1 bis 100 Kohlenstoffatomen steht, der gegebenenfalls ein oder mehrere der folgenden Reste $COO^{\ominus}Z^{\oplus}$, $-O-P(O)(OH)_{2-x}(O^{\ominus}Z^{\oplus})_x$ und $-O-S(O_2)(OH)_{1-y}(O^{\ominus}Z^{\oplus})_y$, mit obigen Definitionen enthält, und die Reste $Z^{\oplus}$) unabhängig voneinander für ein Alkalimetallkation, vorzugsweise $Li^+$, $Na^+$ oder $K^+$, ein Kation der Formel $^+N(R^{9a})_4$ worin die Reste $R^{9a}$ unabhängig voneinander für Wasserstoff oder einen organischen Rest stehen. Stehen alle vier Reste $R^{9a}$ für Wasserstoff, so handelt es sich um ein Ammoniumion. Stehen alle Reste $R^{9a}$ für Kohlenwasserstoffreste, vorzugsweise Kohlenwasserstoffreste mit 1 bis 10 Kohlenstoffatomen, so spricht man von einer besonderen Ausführungsform eines quaternären Ammoniumrestes.

Steht der Rest $R^9$ für einen aliphatischen Rest mit 1 bis 24 Kohlenstoffatomen, so steht er besonders bevorzugt für einen Rest der Formel: $[R^{9b}(CO)_mO]_nR^{9c}$, worin $R^{9b}$ wie $R^2$ definiert ist, $R^{9c}$ für Wasserstoff steht oder wie T definiert ist, m wie u definiert ist und n wie v definiert ist, wobei $R^{9b}$ unabhängig von $R^2$ gewählt ist, die $R^{9c}$ unabhängig von T gewählt ist, m unabhängig von u gewählt ist, und n unabhängig von v gewählt ist.

Zwingend ist, dass wenigstens einer der Reste T in den allgemeinen Formeln (I) und (II) einen Rest $P(O)(OH)_{2-x}(O^{\ominus}Z^{\oplus})_x$ oder $S(O_2)(OH)_{1-y}(O^{\ominus}Z^{\oplus})_y$ enthält oder aus diesem besteht.

*Ersatz der Hydroxylgruppen durch Gruppen OT*

Wie oben definiert sind 10 bis 100 mol-%, bevorzugt 20% bis 100 mol-%, besonders bevorzugt 30% bis 100 mol-% der über die obigen Reste $R^{5b}$ und $R^9$ oder durch Abspaltung von hydrolytisch abspaltbaren Resten entstandenen Hydroxylgruppen durch (i) Reste $-O-P(O)(OH)_{2-x}(O^{\ominus}Z^{\oplus})_x$, (ii) Reste $-O-S(O_2)(OH)_{1-y}(O^{\ominus}Z^{\oplus})_y$ und/oder (iii) Reste $-O-(C=O)_s-(NH)_t-T^a$ ersetzt (Definitionen der Reste wie oben), wobei wenigstens einer der Reste T ein Rest $-O-P(O)(OH)_{2-x}(O^{\ominus}Z^{\oplus})_x$ oder ein Reste $-O-S(O_2)(OH)_{1-y}(O^{\ominus}Z^{\oplus})_y$ ist, oder der Rest $T^a$ wenigstens einen der Reste $-O-P(O)(OH)_{2-x}(O^{\ominus}Z^{\oplus})_x$ oder $-O-S(O_2)(OH)_{1-y}(O^{\ominus}Z^{\oplus})_y$ enthält. Wenngleich in einer Spezies der Formel (I) verschiedene Reste (i), (ii) und (iii) verwirklicht werden können, so ist es üblicherweise bevorzugt, dass nur eine oder zwei Arten von Resten (i), (ii) oder (iii) in einem Polyether der Formel (I) vorliegen. Liegt nur eine Art von Resten vor, so handelt es sich um einen Rest $-O-P(O)(OH)_{2-x}(O^{\ominus}Z^{\oplus})_x$ oder $-O-S(O_2)(OH)_{1-y}(O^{\ominus}Z^{\oplus})_y$. Alle prozentualen Angaben stellen dann auch Grenzen für (i), (ii) und (iii), alleine dar. Dies bedeutet mit anderen Worten, dass sofern die Hydroxylreste ganz oder teilweise nur durch Reste $-O-P(O)(OH)_{2-x}(O^{\ominus}Z^{\oplus})_x$ ersetzt sind die Grenzen "10 bis 100 mol-%", "20% bis 100 mol-%", und "30% bis 100 mol-%" auch für diese Spezies alleine gelten. Denkbar ist jedoch auch, dass beispielsweise jeweils 5 mol-% der Hydroxylgruppen durch Spezies $-O-P(O)(OH)_{2-x}(O^{\ominus}Z^{\oplus})_x$ oder $-O-S(O_2)(OH)_{1-y}(O^{\ominus}Z^{\oplus})_y$ ersetzt sind, was in der Summe ebenfalls die Untergrenze von 10 mol-% realisiert.

Vorzugsweise sind 10 bis 100 mol-%, besonders bevorzugt 20% bis 100 mol-%, und ganz besonders bevorzugt 30% bis 100 mol-% der über die obigen Reste $R^{5b}$ und $R^9$ oder durch Abspaltung von hydrolytisch abspaltbaren Resten entstandenen Hydroxylgruppen durch mindestens einen der Reste $-O-P(O)(OH)_{2-x}(O^{\ominus}Z^{\oplus})_x$, $-O-S(O_2)(OH)_{1-y}(O^{\ominus}Z^{\oplus})_y$

oder einen mindestens eine der beiden vorgenannten Reste enthaltenden Rest $T^a$ ersetzt.

Ganz besonders bevorzugt sind 10 bis 100 mol-%, besser noch 20% bis 100 mol-%, und am besten 30% bis 100 mol-% der über die obigen Reste $R^{5b}$ und $R^9$ oder durch Abspaltung von hydrolytisch abspaltbaren Resten entstandenen Hydroxylgruppen durch mindestens einen Rest $-O-P(O)(OH)_{2-x}(O^{\ominus}Z^{\oplus})_x$ oder einen Rest $T^a$, der mindestens einen Rest $-O-P(O)(OH)_{2-x}(O^{\ominus}Z^{\oplus})_x$ enthält, ersetzt.

Enthalten die Spezies der Formel (I) oder (II) Reste $-O-(C=O)_s-(NH)_t-T^a$, so ist es bevorzugt wenn hierin $T^a$ keine COOH und keine $-COO^{\ominus}Z^{\oplus}$ Reste enthält.

*Die Werte für v, w und p*

In jeder einzelnen Spezies der allgemeinen Formel (I) sind ganzzahlige Werte für v, w und p verwirklicht. Insbesondere bei niedrigen Werten für v, w und p kann der Polyether der allgemeinen Formel (I) ein molekular einheitliches Produkt darstellen, bei welchem zahlenmittleres und gewichtsmittleres Molekulargewicht identisch sind. Bei höheren Werten von v, w und p lässt sich gegebenenfalls nur ein mittlerer Wert für v, w und p angeben, welcher dem Zahlenmittelwert der einzelnen Spezies entspricht. Liegen zahlenmittlere Werte für v, w und p vor, so müssen sich diese in den für die Werte v, w und p angegebenen Grenzen befinden.

Vorzugsweise beträgt der Wert für v = 1 bis 50, besonders bevorzugt steht v für einen Wert von 2 bis 45, ganz besonders bevorzugt von 6 bis 40.

Vorzugsweise beträgt der Wert für w = 1 bis 15, besonders bevorzugt steht v für einen Wert von 1 bis 10, ganz besonders bevorzugt von 1 bis 6.

*Molekularge wichte*

Die Polyether allgemeinen Formel (I) besitzen vorzugsweise ein gewichtsmittleres Molekulargewicht $M_w$ (bestimmt mittels GPC wie im experimentellen Teil angegeben) von 800 bis 5000 g/mol, besonders bevorzugt von 900 bis 4000 g/mol, ganz besonders bevorzugt 1000 bis 3500 g/mol. Die Polydispersität $P_D$, welche ebenfalls mittels GPC bestimmbar ist, beträgt vorzugsweise 1,05 bis 2,0, besonders bevorzugt 1,05 bis 1,8 und ganz besonders bevorzugt 1,1 bis 1,6.

*Besonders bevorzugte Polyether der Formel (I)*

Wenngleich die vorgenannten Reste und Werte der Indizes prinzipiell in den oben angegebenen Bereichen frei kombinierbar sind, insbesondere um hydrophile und hydrophobe Bereiche gut an das jeweilige Anwendungsprofil der Polyether der Formel (I) beziehungsweise der erfindungsgemäßen Netz- und Dispergiermittel anpassen zu können, haben sich für den Bereich pigmentierter Zusammensetzungen, insbesondere pigmentierter Beschichtungsmittelzusammensetzungen die im Folgenden aufgeführten Kombinationen als besonders vorteilhaft herausgestellt.

Besonders bevorzugt steht in den Polyethern der Formel (I):

$R^1$ für einen verzweigten oder unverzweigten Alkylrest mit 1 bis 20, besser noch 1 bis 16 oder 1 bis 12 Kohlenstoffatomen oder einen aromatischen Rest mit 6 bis 10 Kohlenstoffatomen,
u vorzugsweise für 0,
$R^2$ vorzugsweise für Ethylenreste und/oder Propylenreste,
v bevorzugt für einen Wert von 4 bis 50, besonders bevorzugt für einen Wert von 6 bis 40,
$R^3$, $R^4$, $R^7$ und $R^8$ vorzugsweise für Wasserstoff,
$R^5$ vorzugsweise für einen Rest $R^{5b}$, das heißt für einen Rest $CH_2-O-R^{5c}$, worin $R^{5c}$ vorzugsweise für Wasserstoff, einen einwertigen, aliphatischen Kohlenwasserstoffrest, der vorzugsweise 2 bis 24 Kohlenstoffatome enthält, und der optional ein oder mehrere Hydroxylgruppen und ein oder mehrere Sauerstoffatome enthält, oder einen aromatischen Rest mit 6 bis 8 Kohlenstoffatomen, steht,
$R^6$ vorzugsweise für einen Alkylrest mit 1 bis 6, besonders bevorzugt 2 bis 5 und ganz besonders bevorzugt mit 2, 3 oder 4 Kohlenstoffatomen, und $R^9$ vorzugsweise für H, wobei vorzugsweise 10 bis 100 mol-% der über die obigen Reste $R^{5b}$ und $R^9$ oder durch Abspaltung von hydrolytisch abspaltbaren Resten entstandenen Hydroxylgruppen durch Gruppen $P(O)(OH)_{2-x}(O^{\ominus}Z^{\oplus})_x$ ersetzt sind, und worin x und $Z^+$ wie oben definiert sind.

*Netz- und/oder Dispergiermittel enthaltend oder bestehend aus den erfindungsgemäßen Polyethern*

Die vorliegende Erfindung betrifft auch Netz- und/oder Dispergiermittel, enthaltend oder bestehend aus einem oder mehreren Polyethern der allgemeinen Formel (I).

Diese werden auch als erfindungsgemäße Netz- und/oder Dispergiermittel bezeichnet.

Die Netz- und/oder Dispergiermittel werden wie im folgenden Abschnitt dargelegt hergestellt. Vorzugsweise bestehen diese Netz- und Dispergiermittel aus Polyethern der allgemeinen Formel (I). Die Netz- und/oder Dispergiermittel können jedoch auch in gelöster Form vorliegen. Wird Lagerstabilität gefordert, so werden zur Herstellung derartiger Lösungen Lösemittel verwendet, die gegenüber den gelösten Feststoffen inert sind. Geeignete organische Lösemittel sind beispielsweise Ether, Ester, aromatische und aliphatische Kohlenwasserstoffe, es kann aber auch Wasser eingesetzt werden. Ebenfalls möglich ist eine Lösung der erfindungsgemäßen Netz-und/oder Dispergiermittel in ethylenisch ungesättigten monomeren Verbindungen (sogenannten Reaktivverdünnern). Auch können die im Rahmen der Synthese der Polyether der Formel (I) genannten Lösemittel oder deren Mischungen eingesetzt werden.

Das gemäß der im Folgenden dargestellten Synthese hergestellte Netz- und/oder Dispergiermittel kann unter Umständen Nebenprodukte enthalten, so dass das Reaktionsprodukt gegebenenfalls nicht zu 100 Gew.-% aus Spezies der allgemeinen Formel (I) besteht. Vorzugsweise handelt es sich bei den Spezies der allgemeinen Formel (I) um den Hauptbestandteil des Reaktionsprodukts, das heißt es werden durch die nachfolgend beschriebene Synthese vorzugsweise Reaktionsprodukte erhalten, die zu mehr als 50 Gew.-%, besonders bevorzugt mindestens 60 oder mindestens 65 Gew.-% und ganz besonders bevorzugt mindestens 70 Gew.-%, bezogen auf das Gewicht des Reaktionsprodukts an Spezies enthalten, die unter die Formel (I) fallen. Da der Bezugspunkt das Gewicht des Reaktionsprodukts ist, zählen hierzu nicht die Einwaagen an Lösemitteln und eventuell eingesetzten, nicht im Reaktionsprodukt chemisch gebundenen Hilfsstoffen wie beispielsweise Katalysatoren. Die gewichtsprozentualen Anteile sind somit bezogen auf die Summe der Einwaagen der Reaktanten, abzüglich eventuell entstehender Abspaltungsprodukte wie Reaktionswasser oder Alkoholen. Im Optimalfall bestehen die Reaktionsprodukte aus Spezies der allgemeinen Formel (I). Sollten Nebenprodukte enthalten sein, so müssen diese in der Regel nicht abgetrennt werden. Es kommt in solchen Fällen das Reaktionsprodukt einschließlich eventueller Nebenprodukte als Netz- und/oder Dispergiermittel zum Einsatz.

*Verfahren zur Herstellung der erfindungsgemäßen Netz- und Dispergiermittel oder der Polyether der allgemeinen Formel (I)*

Die erfindungsgemäß zum Einsatz kommenden Polyether der Formel (I) beziehungsweise die diese enthaltenden oder aus diesen bestehenden erfindungsgemäßen Netz- und Dispergiermittel werden vorzugsweise durch Polymerisation unter Ringöffnung, ganz besonders bevorzugt durch kationische Polymerisation unter Ringöffnung erhalten. Die kationische Polymerisation erfolgt nach üblichen, dem Fachmann bekannten Verfahren. Geeignete Verfahrensparameter, Katalysatoren und Reaktionsmedien sind unter anderem in der WO 2002/040572 A1 und den dort aufgeführten Zitaten zu finden.

In den nachfolgenden Beispielen wird in allgemeiner Form die Herstellung der erfindungsgemäß zum Einsatz kommenden Polyether der Formel (I) beziehungsweise die diese enthaltenden oder aus diesen bestehenden erfindungsgemäßen Netz- und Dispergiermittel durch entsprechende Verfahrensschemata erläutert.

Die im Folgenden verwendeten Benennungen der Reste und die Verwendung der Indices, entsprechen allen obigen Definitionen der Reste in Bezug auf die Polyether der Formel (I). So entspricht beispielsweise der Rest $R^1$ in der Formel (I) dem Rest $R^1$ in der Formel $R^1OH$. Somit sind alle folgenden Benennungen mit den Benennungen zu Formel (I) identisch. Insoweit für das Herstellverfahren besondere Ausgestaltungen der in Formel (I) definierten Reste und Indices angeführt werden, gelten diese auch als besondere Ausführungsformen der Formel (I). Dies gilt gleichermaßen für die aus den konkreten Verbindungen direkt ableitbaren Reste.

Typischerweise geht die Herstellung der erfindungsgemäßen Polyether der Formel (I) beziehungsweise der diese enthaltenden oder aus diesen bestehenden erfindungsgemäßen Netz- und Dispergiermittel von Monoalkoholen der Formel (III) aus:

$$R^1\text{-OH} \qquad \text{(III)}$$

Beim Rest $R^1$ handelt es sich um einen einwertigen organischen Rest mit 1 bis 100 Kohlenstoffatomen mit den Maßgaben der obigen Formel (I). Bevorzugte Ausgestaltungen dieses Rests sind unter der obigen Überschrift *"Die Reste $R^1$"* aufgeführt. Dieser Rest darf beispielsweise auch von den Gruppen ($O\text{-}R^2$) verschiedene Polyethergruppen oder Polyoxazolingruppen enthalten, ist jedoch vorzugsweise frei von Heteroatomen.

Der Aufbau der Struktureinheiten $[O\text{-}(C{=}O)_u\text{-}R^2]_v$ erfolgt vorzugsweise durch Ringöffnungsreaktionen von Oxiranen der Formel (IV) für u = 0:

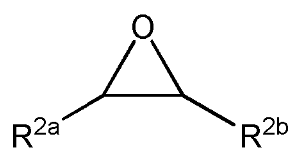

(IV)

worin $R^{2a}$ und $R^{2b}$ unabhängig voneinander für Wasserstoff, einen aliphatischen Rest mit 1 bis 20 Kohlenstoffatomen, einen aromatischen Rest mit 6 bis 10 Kohlenstoffatomen, oder einen araliphatischen Rest mit 7 bis 10 Kohlenstoffatomen stehen. Bevorzugte Ausgestaltungen der Reste $R^{2a}$ und $R^{2b}$ sind unter der obigen Überschrift *"Die Reste $R^2$"* aufgeführt.

Die durch Addition von Spezies der allgemeinen Formel (IV) an die Spezies der allgemeinen Formel (III) erhaltenden Addukte können unter Verwendung einer einzigen Spezies der Formel (IV) oder verschiedenen Spezies der Formel (IV) erhalten werden. In letzterem Fall können die verschiedenen Spezies gleichzeitig eingesetzt werden, was in der Regel zu einer statistischen Verteilung führt, oder nacheinander, was in der Regel zu einem blockartigen Aufbau führt, oder in einer Dosierung bei welcher eine Spezies der Formel (IV) zunächst im Überschuss gegenüber einer mehreren weiteren Spezies der Formel (IV) eingesetzt wird und später im Unterschuss vorliegt, was in der Regel zu einem gradientenartigen Aufbau führt.

Handelt es sich bei $R^{2a}$ und $R^{2b}$ jeweils um Wasserstoff, so handelt es sich bei den Einheiten [O-$R^2$] um Ethylenoxideinheiten. Handelt es sich bei $R^{2a}$ um Wasserstoff und bei $R^{2b}$ um eine Methylgruppe, so handelt es sich bei den Einheiten [O-$R^2$] um Propylenoxideinheiten. Die daraus erhaltenen besonders bevorzugten Produkte sind dementsprechend $R^1$-verkappte Polyethylenoxide, $R^1$-verkappte Polypropylenoxide oder $R^1$-verkappte statistische, blockartige oder gradientenartige Poly(ethylenoxid/propylenoxid)-Addukte.

Die als Starteinheiten für die Oxetanpolymerisation verwendeten Addukte aus (III) und (IV) können auch aus alkoxylierten Alkoholen gewählt werden. Solche alkoxylierten Monoalkohole (beispielsweise erhältlich unter dem Handelsnamen Lutensol® von der Firma BASF SE, Ludwigshafen) werden durch basischkatalysierte Ringöffnung von Ethylenoxid oder Propylenoxid oder beidem an Alkoholen, wie Methanol, Butanol, n-Decanol, iso-Decanol, Oleylalkohol, Behenylalkohol oder Guerbet-Alkoholen erhalten. Als basische Alkoxylierungskatalysatoren werden im Allgemeinen KOH, NaOH, CsOH oder KOtBu und $NaOCH_3$ eingesetzt. Es wird üblicherweise bei Temperaturen zwischen 80 und 140°C und bei Drücken zwischen 2 und 10 bar gearbeitet.

Der Aufbau der Struktureinheiten $[O-(C=O)_u-R^2]_v$ kann auch durch Ringöffnungspolymerisation von Lactonen der Formel (V) für u = 1 erfolgen:

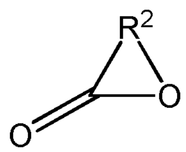

(V)

worin $R^2$ wie oben definiert ist und besonders bevorzugt für einen aliphatischen Kohlenwasserstoffrest mit 4 bis 6 Kohlenstoffatomen steht.

Ebenfalls einsetzbar, jedoch aufgrund des frei werdenden Reaktionswassers weniger bevorzugt, sind die Hydroxycarbonsäuren (Va), die durch Kondensationsreaktion an endständige Hydroxylgruppen beispielsweise der Formel (III) gebunden werden können

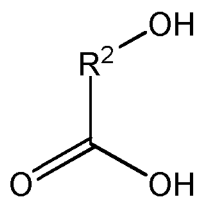

(Va)

Die in der allgemeinen Formel (Va) an den selbst hydroxylgruppenfreien Rest $R^2$ gebundene Hydroxylgruppe kann an beliebiger Stelle im Rest $R^2$ gebunden sein. In Frage kommen beispielsweise die ungesättigten Hydroxycarbonsäuren, welche in Ricinusöl vorkommen oder deren hydrierte Analoga wie beispielsweise 12-Hydroxystearinsäure.

Auch einsetzbar sind die cyclischen Diester von alpha-Hydroxycarbonsäuren (auch als Lactide bezeichnet) wie sie in Formel (Vb) dargestellt sind.

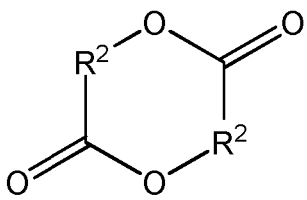

(Vb)

Ein Beispiel hierfür ist der Diester der Milchsäure, wobei $R^2$ für $CH\text{-}CH_3$ steht.

Bevorzugte Ausgestaltungen der Reste $R^2$ sind unter der obigen Überschrift *"Die Reste R2"* aufgeführt.

Die durch ein- oder mehrfache Addition von Spezies der allgemeinen Formel (V) und (Vb) beziehungsweise ein- oder mehrfache Kondensation der Spezies der Formel (Va) an die Verbindungen der allgemeinen Formel (III) erhaltenden Addukte können unter Verwendung einer oder mehreren Spezies der Formel (V), (Va) und (Vb) erhalten werden. Werden mehrere verschiedene Spezies gleichzeitig eingesetzt so führt dies in der Regel zu einer statistischen Verteilung der Reste innerhalb der sich bildenden Kette, werden sie nacheinander eingesetzt so führt dies in der Regel zu einem blockartigen Aufbau. Werden sie so dosiert, dass eine Spezies der Formel (V), (Va) oder (Vb) zunächst im Überschuss gegenüber einer mehreren weiteren Spezies eingesetzt werden und diese später im Unterschuss vorliegt, so führt dies in der Regel zu einem gradientenartigen Aufbau.

Handelt es sich bei $R^2$ um einen Rest $(CH_2)_5$, so handelt es sich bei der Spezies der allgemeinen Formel (V) um epsilon-Caprolacton und bei der Formel (Va) um 6-Hydroxyhexansäure. Handelt es sich bei $R^2$ um einen Rest $(CH_2)_4$, so handelt es sich bei der Spezies der allgemeinen Formel (V) um delta-Valerolacton beziehungsweise bei der Formel (Va) um 5-Hydroxyvaleriansäure. Die daraus erhaltenen bevorzugten Produkte sind dementsprechend $R^1$-verkappte Polycaprolactone, $R^1$-verkappte Polyvalerolactone oder $R^1$-verkappte statistische, blockartige oder gradientenartige Poly(caprolacton/valerolacton)-Addukte.

Es ist auch möglich zunächst eine oder mehrere Verbindungen der allgemeinen Formel (III) mit einer oder mehreren Spezies der Formel (IV) umzusetzen und anschließend das erhaltene Addukt mit einer oder mehreren Spezies der Formel (V), (Va) und/oder (Vb).

Ebenfalls möglich ist, dass zunächst eine oder mehrere Verbindungen der allgemeinen Formel (III) mit einer oder mehreren Spezies der Formel (V), (Va) und/oder (Vb) umgesetzt werden und anschließend das erhaltene Addukt mit einer oder mehreren Spezies der Formel (IV).

Auf die vorgenannte Art und Weise können beispielsweise blockartig aufgebaute Strukturen aus Polyetherblöcken (u = 0) und Polyesterblöcken (u = 1) aufgebaut werden, die wiederum innerhalb der Blöcke, wie oben dargestellt statistisch, blockartig oder gradientenartig aufgebaut sein können. Es können sich auch mehrere Polyether- und/oder Polyester-Blöcke abwechseln.

Durch die Wahl der Verbindung der Formel (III) und des Oxirans nach Formel (IV) oder der Spezies nach Formel (V), (Va) und/oder (Vb) lassen sich hydrophile und hydrophobe Strukturen auch innerhalb der Spezies der folgenden Formel (VI) kombinieren.

Die erhaltenen Produkte besitzen vorzugsweise folgende Struktur der Formel (VI):

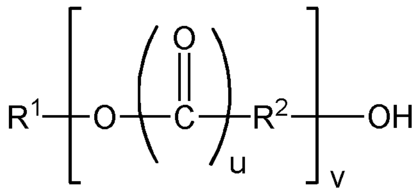

(VI)

An die Spezies der Formel (VI) lassen sich wiederum ein oder mehrere Oxetane der Formel (VII) addieren:

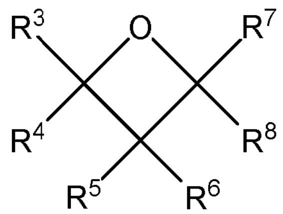

(VII)

Die Reste $R^3$, $R^4$, $R^5$, $R^6$, $R^7$ und $R^8$ sind wie unter Formel (I) definiert. Bevorzugte Ausgestaltungen der Reste $R^3$, $R^4$, $R^5$, $R^6$, $R^7$ und $R^8$ sind unter den obigen Überschriften *"Die Reste $R^3$, $R^4$, $R^7$ und $R^8$"*, *"Der Rest $R^5$"* und *"Der Rest $R^6$"* beziehungsweise *"Verbundene Reste $R^5$ und $R^6$"* aufgeführt.

Ganz besonders bevorzugt stehen die Reste $R^3$, $R^4$, $R^7$ und $R^8$ für Methyl oder Wasserstoff, am bevorzugtesten für Wasserstoff.

Bevorzugte Beispiele für Reste $R^{5a}$ sind lineare Alkylreste mit 1 bis 20, vorzugsweise 2 bis 10 oder 2 bis 8 Kohlenstoffatomen, verzweigte oder cyclische Alkylreste mit 3 bis 20, vorzugsweise 4 bis 10 Kohlenstoffatomen, Arylreste mit 6 bis 10 Kohlenstoffatomen, Arylalkylreste mit 7 bis 14 Kohlenstoffatomen, Alkylarylreste mit 7 bis 14 Kohlenstoffatomen. Wasserstoffatome können in diesen Resten durch Halogenatome ersetzt sein. Ist dies der Falls so handelt es sich beim Halogen vorzugsweise um Chlor. Bevorzugt wird nur ein Wasserstoffatom durch ein Halogenatom ersetzt. Besonders bevorzugt enthalten die Reste $R^{5a}$ jedoch keine Halogenatome.

Ebenfalls bevorzugte Reste $R^{5a}$, sind Reste $CH_2$-O-$R^{5d}$, in welchen $R^{5d}$ für einen Rest $R^{5a}$ steht, insbesondere einen der im vorangegangenen Absatz als bevorzugt genannten Reste $R^{5a}$. Handelt es sich bei der Gruppe $R^{5d}$ um eine unter Hydrolysebedingungen leicht abspaltbare Alkylgruppe wie beispielsweise eine tert.-Butylgruppe so kann diese nach erfolgter Additionsresaktion auch abgespalten werden, wobei eine Gruppe $R^{5b}$ der Formel $CH_2$-OH gebildet wird. Der Fachmann kennt weitere leicht abspaltbare Gruppen, die auch als Schutzgruppen bezeichnet werden. Auch die so erhaltenen Hydroxylgruppen zählen zu den zu 10 bis 100 mol-% durch Reste OT zu ersetzenden Hydroxylgruppen.

Kommerziell erhältliche Verbindungen dieser Art sind beispielsweise 3-Ethyl-3-((phenoxy)methyl)-oxetane (OXT-211, erhältlich von Toagosei Co., Ltd., Japan) und 3-Ethyl-3-((2-ethylhexyloxy)methyl)-oxetane (OXT-212, erhältlich von Toagosei Co., Ltd., Japan).

Ganz besonders bevorzugt steht $R^5$ für einen Rest $R^{5b}$ und der $R^6$ für $R^{5a}$.

Üblicherweise wird die kationische Polymerisation von Oxetanen der Formeln (VII) an Spezies der Formel (VI) oder vorzugsweise *in-situ* gebildete Hydroxylgruppen in Spezies der Formel (I) unter Ringöffnung in Gegenwart eines Katalysators ohne Zusatz eines Lösungsmittels durchgeführt. Die Polymerisation kann jedoch auch unter Mitverwendung eines unter den Polymerisarionsbedingungen inerten Lösungsmittels - wie unten im Detail beschrieben - durchgeführt werden.

Je nach Reihenfolge der Zugabe der unter Ringöffnung kationisch polymerisierbaren Spezies der Formel (VII) kann ein statistischer, blockartiger oder gradientenartiger Aufbau innerhalb des Rests

$$[C(R^3)(R^4)\text{-}C(R^5)(R^6)\text{-}C(R^7)(R^8)\text{-}O]_w$$

erhalten werden. Index w ist wie in Formel (I) definiert.

Durch Reaktion der Spezies der Formel (VI) mit Spezies der Formel (VII) resultieren Spezies der Formel (I) mit $R^9$ = H, also einer endständigen Hydroxylgruppe.

Werden zusätzlich Spezies der allgemeinen Formel (I) mit $R^5 = R^{5b}$ eingesetzt, so resultieren Spezies, die weitere, über den Rest $R^{5b}$ eingebrachte Hydroxylgruppen enthalten.

Diese Hydroxylgruppen sind in den Polyethern der Formel (I) nicht endständig, sondern liegen als hydroxyfunktionelle Seitengruppen am Polyether-Rückgrat des Polyethers (I) vor.

An diese seitständigen Hydroxylgruppen in den Resten $R^{5b}$, aber auch an die terminale Hydroxylgruppe $OR^9$ mit $R^9$ = H, lassen sich wiederum Oxirane der Formel (IV), Lactone der Formel (V) oder Oxtetane der Formel (VI) addieren, so dass aus den Hydroxylgruppen enthaltenden Seitengruppen am Polyether schließlich Hydroxylgruppen und Ethersauerstoffatome enthaltende Seitenketten generierbar sind beziehungsweise die endständige Hydroxylgruppe $OR^9$ mit $R^9$ = H unter Bildung mindestens einer weiteren Hydroxylgruppe modifiziert wird.

Enthalten die so an eine seitenständige oder terminale Hydroxylgruppe addierten Oxirane der Formel (IV), Spezies der Formeln (V), (Va) und (Vb) oder Oxtetane der Formel (VI) selbst keine Hydroxylgruppen, so bleiben die Seitenketten monohydroxyfunktionell beziehungsweise wird die Hauptkette verlängert.

Enthalten die so an eine seitenständige oder terminale Hydroxylgruppe addierten Oxtetane der Formel (VI) jedoch selbst Hydroxylgruppen (diese Oxetane werden im Folgenden auch Hydroxyoxetane genannt), so findet pro Addition eines solchen Hydroxyoxetans nicht nur durch Ringöffnung eine Fortpflanzung der bereits vorhandenen Hydroxylgruppe statt, sondern auch die Einführung der bereits am Hydroxyoxetan befindlichen Hydroxylgruppe oder Hydroxylgruppen. Sowohl an die durch Ringöffnung gebildete als auch die bereits am Hydroxyoxetan befindliche oder befindlichen Hydroxylgruppen können weitere Oxirane der Formel (IV), Spezies der Formeln (V), (Va) und/oder (Vb) oder Oxtetane der Formel (VI), insbesondere Oxetane der Formel (VI), die selbst hydroxyfunktionell, vorzugsweise monohydroxyfunktionell sind addiert werden. In diesem Fall können am Polyether der Formel (I), seitenständig oder terminal, verzweigte, vorzugsweise hyperverzweigte, oder quasi-dentritische hydroxyoxetanbasierte Strukturen aufgebaut werden. Ob nur eine einzige oder wenige seit- oder endständige Hydroxylgruppen durch Addition eines Hydroxyoxetans gebildet werden sollen oder verzweigte beziehungsweise hochverzweigte Strukturen generiert werden sollen kann durch die Einsatzmenge der Hydroxyoxetane gesteuert werden. Vorteilhaft kann es auch sein, dass ein hydroxyoxetanbasierter Block durch einen hydrophoben der aus nicht hydroxygruppenhaltigen Oxetanen aufgebaut ist eingeleitet wird.

Die erhaltenen Produkte sind somit in Abhängigkeit von der Verwendung oder "Nichtverwendung" hydroxyfunktioneller Oxetane insgesamt monohydroxylfunktionell oder polyhydroxyfunktionell, wobei die Hydroxygruppen wie unten beschrieben vollständig oder teilweise (mindestens 10 mol-% der Hydroxylgruppen) durch Gruppen OT zu ersetzen sind.

Generell lässt sich feststellen, dass für den Fall, dass streng-lineare Polyether der Formel (I) erhalten werden sollen, keine Hydroxyoxetane zum Einsatz gelangen, das heißt keine Oxetane der Formel (VII) mit dem Rest $R^{5b}$ eingesetzt werden. Solche Spezies besitzen in dem oder den Polyoxetan-Abschnitten eher hydrophobe Eigenschaften. Um dennoch eine amphiphile Spezies der Formel (I) zu erzeugen werden in einem solchen Fall vorzugsweise $R^{2a}$ und $R^{2b}$ für Wasserstoff stehen. Das heißt der oder die Polyoxetan-Abschnitte werden durch hydrophile Polyethylenoxid-Abschnitte eingeleitet.

Von den in den Zwischenprodukten bei der Herstellung der Polyether der Formel (I) enthaltenen Hydroxylgruppen sind im Endprodukt zumindest 10 mol-% durch Gruppen OT ersetzt. Derartige Reste OT enthaltenden Polyether der Formel (I) sind in Beschichtungsmittelzusammensetzungen, aber insbesondere auch in High-Solids-oder lösemittelfreien Systemen und besonders bevorzugt in SMC und BMC einsetzbar.

Gemäß der Definition der Polyether der Formel (I) sind 10 bis 100 mol-% der Hydroxylgruppen in den Resten $R^{5b}$ und $R^9$ durch einen Rest OT ersetzt, der gewählt wird aus der Gruppe bestehend aus

(i) Resten $-O-P(O)(OH)_{2-x}(O^{\ominus}Z^{\oplus})_x$, worin x für 0, 1 oder 2 steht,
(ii) Resten $-O-S(O_2)(OH)_{1-y}(O^{\ominus}Z^{\oplus})_y$, worin y für 0 oder 1 steht, und
(iii) Resten $-O-(C{=}O)_s-(NH)_t-T^a$, worin s für 0 oder 1 und t für 0 oder 1 steht und für den Fall dass s = 0 auch t = 0 gilt, und worin $T^a$ für einen einwertigen organischen Rest mit 1 bis 100, vorzugsweise 1 bis 50, besonders bevorzugt 1 bis 30 oder 1 bis 20 und ganz besonders bevorzugt 1 bis 10 Kohlenstoffatomen steht, der gegebenenfalls einen oder mehrere der folgenden Reste $COO^{\ominus}Z^{\oplus}$, COOH, $-O-P(O)(OH)_{2-x}(O^{\ominus}Z^{\oplus})_x$ und $-S(O_2)(OH)_{1-y}(O^{\ominus}Z^{\oplus})_y$ enthält,

und wobei die obigen Reste $Z^{\oplus}$ unabhängig voneinander für Alkalimetallkationen, ein Ammoniumion oder protonierte oder quaternisierte Amine stehen, mit der Maßgabe, dass mindestens einer der Reste OT mindestens einen der Reste $-O-P(O)(OH)_{2-x}(O^{\ominus}Z^{\oplus})_x$ oder $-O-S(O_2)(OH)_{1-y}(O^{\ominus}Z^{\oplus})_y$.enthält oder aus diesem besteht.

Die unter (i) genannten Reste $-O-P(O)(OH)_{2-x}(O^{\ominus}Z^{\oplus})_x$ können beispielsweise durch durch vollständige oder teilweise Phosphorylierung der Hydroxylgruppen mit Polyphosphorsäureanhydrid, Polyphosphorsäuren oder Phosphorsäurechloriden eingeführt werden.

Zur Einführung der unter (ii) genannten Reste $-O-S(O_2)(OH)_{1-y}(O^{\ominus}Z^{\oplus})_y$ können die Hydroxylgruppen mit Hilfe von konzentrierter Schwefelsäure, Oleum, Schwefeltrioxid oder Chlorsulfonsäure umgesetzt werden.

Andere Methoden für die Einführung von Sulfonsäuregruppen (ii) und Phosphorsäuregruppen (i) sind zum Beispiel im Journal of Polymer Science: Part A: Polymer Chemistry 2001, 39, 955-963 beschrieben.

Die Einführung von Sulfonsäuregruppen (ii) und Phosphorsäuregruppen (i) ist gegenüber der Einführung von $COO^{\ominus}Z^{\oplus}$ oder COOH (über den Rest $T^a$ der Alternative (iii)) bevorzugt.

Ganz besonders bevorzugt werden Reste $-O-P(O)(OH)_{2-x}(O^{\ominus})Z^{\oplus})_x$, $-O-S(O_2)(OH)_{1-y}(O^{\ominus}Z^{\oplus})_y$ und $-O-(C{=}O)_s-(NH)_t-T^a$ eingeführt, wobei bei letzteren der Rest $T^a$ wenigstens einen der Reste $-O-P(O)(OH)_{2-x}(O^{\ominus}Z^{\oplus}B)_x$ und $-O-S(O_2)(OH)_{1-y}(O\ ^{\ominus}Z^{\oplus})_y$ trägt. Am bevorzugtesten erfolgt ein teilweiser oder vollständiger Ersatz der OH-Gruppen durch Reste OT, bei denen es sich ausschließlich um $-O-P(O)(OH)_{2-x}(O^{\ominus}Z^{\oplus})_x$ oder Reste $-O-(C{=}O)_s-(NH)_t-T^a$ handelt, worin $T^a$ eine oder mehrere Gruppen $-O-P(O)(OH)_{2-x}(O^{\ominus}Z^{\oplus}))_x$ enthält.

Die Einführung der Reste (iii) $-O-(C{=}O)_s-(NH)_t-T^a$ kann ebenfalls auf verschiedene Weise erfolgen. Für den Fall, dass s = t = 1 ist, können die Hydroxylgruppen mit einem Isocyanat der Formel $T^a$-N=C=O umgesetzt werden. Durch eine Modifikation mit längerkettigen Alkylisocyanaten, wie beispielsweise Stearylisocyanat, kann die Polarität des Polymers so in Richtung Hydrophobie verändert werden, wodurch beispielsweise ein Einsatz der Polymere in unpolaren Thermoplasten erleichtert wird. Dagegen erzielt man eine Erhöhung der Hydrophilie und gegebenenfalls verbesserte Wasserlöslichkeit dadurch, dass freie Hydroxylgruppen des Polyethers der Formel (I) ganz oder teilweise mit hydrophilen Verbindungen, beispielsweise mit Toluylendiisocyanat-Monoaddukten umgesetzt werden. Geeignet sind beispielsweise Monoaddukte, die aus der Umsetzung von Toluylendiisocyanat (TDI) mit methanolgestartetem Polyethylenglykol erhalten werden. Durch entsprechende Mischungen von hydrophilen und hydrophoben Modifizierungen lassen sich auch amphiphile Polyether der Formel (I) herstellen.

Die Einführung der Reste (iii) $-O-(C{=}O)_s-(NH)_t-T^a$ mit s = 1 und t = 0 ist beispielsweise durch die Umsetzung freier Hydroxylgruppen an Polyethern der Formel (I) mit Mono- oder Polycarbonsäuren, beziehungsweise deren Anhydriden, Halogeniden, insbesondere Chloriden oder Estern möglich.
Beispielsweise können freie Hydroxylgruppen ganz oder teilweise mit Essigsäure verestert werden, hierbei steht $T^a$ für eine Methylgruppe.

Durch den Einsatz von Polycarbonsäuren, deren Anhydriden, Halogeniden, insbesondere Chloriden oder Estern anstelle der vorgenannten Monocarbonsäuren, deren Anhydriden, Halogeniden, insbesondere Chloriden oder Estern, können Reste $T^a$ eingeführt werden, die einen Rest $COO^{\ominus}Z^{\oplus}$ enthalten. Hierfür besonders geeignete Polycarbonsäuren, beziehungsweise deren Anhydride sind cyclische Carbonsäureanhydride wie, Bernsteinsäureanhydrid, Trimellitsäureanhydrid und Maleinsäureanhydrid.

Die erfindungsgemäß zum Einsatz kommenden Polyether der Formel (I) weisen vorzugsweise keine Estergruppen mit Ausnahme der vorgenannten Bernsteinsäuremonoestergruppen, Trimellitsäuremonoestergruppen oder Maleinsäuremonoestergruppen auf. Bevorzugt unter den vorgenannten Gruppen sind Bernsteinsäuremonoestergruppen und Trimellitsäuremonoestergruppen, da diese keine ungesättigten Kohlenstoff-Kohlenstoff-Doppelbindungen enthalten.

Durch die vorstehend beschriebene Umsetzung freier Hydroxylgruppen mit Maleinsäureanhydrid und anschließender Sulfonierung mit beispielsweise Natriumsulfid kann nach bekannten Methoden eine Sulfonsuccinatgruppe eingeführt werden. Der Rest $T^a$ enthält dann sowohl einen Rest $COO^{\ominus}Z^{\oplus}$als auch einen Rest $-S(O_2)(OH)_{1-y}(O^{\ominus}Z^{\oplus})_y$.

Die Einführung einer Carboxymethylgruppe ($T^a = CH_2COOH$) kann mit Hilfe von Natriumhydrid und Natriumchloracetat erfolgen.

Weitere Methoden zur Einführung eines COOH- oder $COO^{\ominus}Z^{\oplus}$-haltigen Rests $T^a$ sind die Addition eines tert.-Butylacrylats oder Acrylnitrils mit anschließender Hydrolyse und gegebenenfalls einer Versalzung.

Durch Veretherung von Hydroxylgruppen, die ebenfalls nach Verfahren, die dem Fachmann bekannt sind erfolgen kann, lassen sich Spezies erzeugen für die s = t = 0 gilt.

Sofern die Indizes x und y den Wert 0 annehmen liegen freie Säuren vor. Es kann jedoch vorteilhaft sein diese in durch Versalzung in negativ geladene Gruppen zu überführen. Dies gilt insbesondere dann, wenn die zu dispergierenden Pigmente und/oder Füllstoffe eine starke Affinität zu negativ geladenen Haftgruppen besitzen.

Die aciden Wasserstoffatome der unterschiedlichen Säuregruppen können durch Reaktion mit einer Base in die entsprechenden Salze umgewandelt werden.

Geeignete Salze sind beispielsweise Ammoniumsalze, hergestellt durch Reaktion einer oder mehrerer der freien Säuregruppen mit Ammonium oder einem geeigneten organischen Amin, tertiären Aminen, vorzugsweise Triethylamin, Alkanolaminen, wie beispielsweise Triethanolamin, Ammoniumhydroxid oder Tetraalkylammoniumhydroxid. Weiterhin eignen sich zur Umsetzung mit den Säuregruppen Alkalihydroxide, wie beispielsweise Lithiumhydroxid, Natriumhydroxid, Kaliumhydroxid oder entsprechende Carbonate wie beispielsweise Kaliumcarbonat oder Dicarbonate wie Kaliumdicarbonat.

Die erfindungsgemäßen Polyether der Formel (I) besitzen vorzugsweise wenigstens einen hydrophilen und wenigstens einen hydrophoben Block, wobei bei Vorhandensein von mehr als einem hydrophilen und mehr als einem hydrophoben Block, die Blöcke vorzugsweise abwechselnd angeordnet sind.

Sofern bei der kationischen Polymerisation unter Ringöffnung verzweigte Struktureinheiten eingeführt werden sollen, wird vorzugsweise die kationische Polymerisation mit Hilfe eines Startermoleküls der Formel (III) oder (VI) vorzugsweise unter Polymerisation von Oxetanen der Formel (VII) mit $R^5 = R^{5a}$ zur Bildung eines eher entsprechenden hydrophoben Blocks, begonnen, gefolgt vor einem Block verzweigter hydrophiler Strukturen aufgebaut aus Oxetanen der Formel (VII) mit $R^5 = R^{5b}$.

Die erfindungsgemäß zum Einsatz kommenden Polyether der Formel (I) weisen in den Resten $R^{5b}$ und $R^9$ vorzugsweise 2 bis 10, besonders bevorzugt 2 bis 8, ganz besonders bevorzugt 2 bis 6 und am bevorzugtesten 3 bis 4 Hydroxylgruppen auf, von welchen 10 bis 100 mol-%, bevorzugt 20% bis 100 mol-%, besonders bevorzugt 30% bis 100 mol-% zu obigen Resten $-O-P(O)(OH)_{2-x}(O^{\ominus}Z^{\oplus})_x$, $-O-S(O_2)(OH)_{1-y}(O^{\ominus} Z^{\oplus})_y$ und/oder $-O-(C=O)_s-(NH)_t-T^a$, umgesetzt sind. Eine Umsetzung zu den Resten $- O-P(O)(OH)_{2-x}(O^{\ominus}Z^{\oplus})_x$ ist besonders bevorzugt.

In einer bevorzugten Ausführungsform der Spezies der Formel (I) sind 10 bis 90 mol-%, besonders bevorzugt 20 bis 80 mol-%, ganz besonders bevorzugt 30 bis 70 mol-% der Hydroxylgruppen in den Resten $R^{5b}$ und $R^9$ durch einen Rest OT ersetzt.

*Typische Reaktionsbedingungen im erfindungsgemäßen Verfahren zur Herstellung der erfindungsgemäßen Polyether der Formel (I) beziehungsweise der erfindungsgemäßen Netz- und Dispergiermittel*

Die als Starteinheiten für die Oxetanpolymerisation verwendeten Monoalkohole können, wie oben bereits erwähnt, auch aus alkoxylierten Alkoholen gewählt werden.

Werden als Spezies der Formel (IV) Glycidylether, wie beispielsweise Phenylglycidylether oder Glycidylester eingesetzt, so kann die Ringöffnungsreaktion beispielsweise wie in US 2011/257326 A1 ausführlich beschrieben durchgeführt werden.

Die ringöffnende Polymerisation der Oxetane der allgemeinen Formel (VII) an Spezies der allgemeinen Formeln (III) oder vorzugsweise (VI) erfolgt bevorzugt als kationische oxetan-ringöffnende Polymerisation bei etwa 30°C bis 130°C, vorzugsweise bei etwa 50°C bis 110°C, in Anwesenheit mindestens eines Katalysators.

Bevorzugt werden die Oxetane der Formel (VII) bei denen $R^5$ für $R^{5a}$ oder $R^{5b}$ steht oder deren Mischungen zu dem vorgewärmten Reaktionsgemisch dosiert, welches schon mindestens eine Spezies der allgemeinen Formeln (III) oder vorzugsweise mindestens eine der Spezies der allgemeinen Formel (VI) und mindestens einen Katalysator enthält.

Wenn ein gezielter Aufbau von hydrophoben und hydrophilen Struktureinheiten im oxetanbasierten Teil des Polyethers der allgemeinen Formel (I) erzielt werden soll, werden die entsprechenden hydrophilen oder hydrophoben Oxetane der Formel (VII) getrennt voneinander und nacheinander, gegebenenfalls mit einer Pause zwischen den unterschiedlichen Oxetan-Monomeren, dosiert.

Bevorzugt wird die Synthese der erfindungsgemäßen Polyether der Formel (I) mittels der kationischen, ringöffnenden Polymerisation der Oxetane der Formel (VII) durch die Auswahl bestimmter Startmoleküle der Formeln (III) oder (VI) erleichtert.

Die Reaktionsführung gelingt in der Regel besonders gut mit Startmolekülen der allgemeinen Formel (VI) mit u = 0 und $v \geq 2$, vorzugsweise $v \geq 6$, besonders bevorzugt v = 8 bis 40. Besonders bevorzugt lassen sich Alkyloxypolyalkylenoxide oder Aryloxypolyalkylenoxide einsetzen. Als bevorzugte Beispiele lassen sich $C_{1-12}$-Alkoxypolyalkylenoxide, insbesondere $C_{1-12}$-Alkoxypoly($C_{2-3}$-alkylenoxide) wie beispielsweise Methoxypolyethyleneoxide nennen.

Am Ende der Reaktion wird das Produkt abgekühlt und gegebenenfalls der Katalysator durch Zugabe einer Base neutralisiert. Dies kann auch mit Hilfe von basischen Ionenaustauschern erzielt werden. Salze oder feste Katalysatoren können beispielsweise aus dem Reaktionsgemisch durch Filtrieren entfernt werden.

Als Katalysatoren für die kationische ringöffnende Polymerisation von Oxetanen sind beispielsweise Lewis-Säuren, wie insbesondere $AlCl_3$, $BF_3$, $TiCl_4$, $ZnI_2$, $SiF_4$, $SbF_5$, $PF_5$, $AsF_5$ oder $SbCl_5$ sowie beispielsweise halogenierte Säuren, wie insbesondere $FSO_3H$, $ClSO_3H$, $HClO_4$, $HIO_4$ oder $CF_3SO_3H$ sowie weitere Brönsted-Säuren (wie beispielsweise p-Toluolsulfonsäure und Methansulfonsäure) oder Heteropolysäuren wie 12-Wolframophosphorsäure oder Heteropolysäuren, die beispielsweise der allgemeinen Zusammensetzungen $H_4XM_{12}O_{40}$ mit X = Si, Ge; M = W, Mo oder $H_3XM_{12}O_{40}$ und $H_6X_2M_{18}O_{62}$ mit X = P, As; M = W, Mo geeignet. Insbesondere können katalytisch aktive Heteropolysäuren ein oder mehrere Mole an Kristallwasser enthalten. Als Katalysatoren können auch Oniumsalze, wie beispielsweise ein Sulfonium-, ein Oxonium- und/oder Iodoniumsalz eingesetzt werden. Beispiele für derartige Verbindungen sind Benzyltetramethylensulfonium-hexafluoroantimonat, Benzyltetramethylensulfonium-hexafluorophosphat und Benzyltetramethylensulfonium-trifluormethansulphonat. Bevorzugt wird als Katalysator 12-Wolframophosphorsäure eingesetzt. Vorteile der Verwendung dieses Katalysators bei der kationischen Polymerisation von Oxetanen sind die relativ niedrigen Reaktionstemperaturen und die damit verbundene geringe thermische Belastung des Produkts. Besonders herauszustellen ist aber die Eigenschaft des Katalysators die Produkte farblich nicht negativ - etwa durch Braun- oder Schwarzfärbung - zu beeinflussen. Zudem werden aromatische Substituenten in den Monomeren und im Produkt durch den Katalysator nicht zerstört oder chemisch verändert (Verseifung, Substitution, elektrophile Addition).

Bei der Herstellung der erfindungsgemäßen Polyether der Formel (I) können Lösemittel verwendet werden. Diese dürfen die kationische den Oxetanring öffnende Polymerisation jedoch nicht beeinflussen. Geeignete Lösemittel sind beispielsweise solche, die keine aktiven Wasserstoffatome, keine polymerisierbaren Ringe und keine Gruppen enthalten, die mit den Oxetanen der Formel (VII), insbesondere den Hydroxylgruppen der Hydroxyoxetanen (enthaltend mindestens einen Rest $R^{5b}$), mit dem Startmolekül der Formeln (III) oder vorzugsweise der Formel (VI) oder mit Zwischenprodukten oder dem entstehenden Polyether der Formel (I) reagieren könnten. Vorzugsweise können aliphatische, cycloaliphatische und aromatische Lösemittel, Ketone und blockierte Polyether als Lösemittel eingesetzt werden.

Die Wahl des Lösemittels kann sich auch an dem späteren Einsatzzweck der erfindungsgemäßen Netz- und Dispergiermittel orientieren. Bevorzugt werden niedrigsiedende Lösemittel eingesetzt, um das Abdestillieren bei solchen Anwendungen zu erleichtern, bei denen die später erhaltenen Polyether der Formel (I) beziehungsweise die erfindungsgemäßen Netz- und Dispergiermittel als 100%-Formulierung eingesetzt werden sollen, beispielsweise bei strahlenhärtenden, insbesondere UV-härtenden Zusammensetzungen, insbesondere derartigen Beschichtungsmittelzusammensetzungen. Bevorzugt erfolgt die Herstellung der Zielspezies in Anwesenheit eines oder mehrerer Lösemittel.

*Verwendung der erfindungsgemäßen Polyester und der erfindungsgemäßen Netz-und Dispergiermittel in erfindungsmäßen Zusammensetzungen*

Die erfindungsgemäßen Zusammensetzungen enthalten die vorstehend definierten erfindungsgemäßen Polyester der allgemeinen Formel (I) beziehungsweise die erfindungsgemäßen Netz- und/oder Dispergiermittel insbesondere zur Dispergierung von partikulären Feststoffen vorzugsweise Pigmenten und/oder Füllstoffen.

Die erfindungsgemäßen Zusammensetzungen sind vorzugsweise bei 25 °C flüssig. Die bei 25 °C flüssigen erfindungsgemäßen Zusammensetzungen enthalten die erfindungsgemäßen Polyether der Formel (I) oder die diese enthaltenden oder aus diesen bestehenden Netz- und Dispergiermittel vorzugsweise in Mengen von 0,1 bis 10 Gew.-%, besonders bevorzugt 0,3 bis 8 Gew.-%, ganz besonders bevorzugt 0,5 bis 5 Gew.-% oder 0,5 bis 3 Gew.-%, bezogen auf das Gesamtgewicht der Zusammensetzung. Wird in diesem Zusammenhang von einem Gehalt an Netz- und Dispergiermitteln in den erfindungsgemäßen Zusammensetzungen gesprochen, so bezieht sich dieser Gehalt auf das lösemittelfreie Netz- und Dispergiermittel, das heißt auf das Reaktionsprodukt des erfindungsgemäßen Verfahrens.

Bei den erfindungsgemäßen Zusammensetzungen handelt es sich vorzugsweise um wässrige, lösemittelfreie oder lösungsmittelhaltige Beschichtungsformulierungen oder Mahlgüter zu deren Herstellung oder um Formulierungen für Formmassen wie insbesondere SMC und BMC, die vorzugsweise dispergierte Pigmente und/oder Füllstoffe enthalten.

Die Zusammensetzungen eignen sich für zahlreiche Anwendungen. So werden für die Herstellung von Universaltönpasten, Pigmentoberflächenmodifizierungen, Color Resists für Farbfilter, Pigmentkonzentrate oder Zusammensetzungen, die anorganische Füllstoffe wie insbesondere $CaCO_3$, $BaSO_4$ oder anorganische Flammschutzmittel wie Aluminiumoxid beziehungsweise Aluminiumtrihydroxid (ATH) enthalten, vorzugsweise Netz- und/oder Dispergiermittel gefordert, die in unterschiedlichen flüssigen Medien wie in organischen Lösungsmitteln oder in Wasser stabile Pigment- und Füllstoffdispersionen ermöglichen und dementsprechend auch weiter in wässrigen Medien, lösemittelfreien oder lösungsmittelhaltigen Medien zur weiteren Formulierung eingearbeitet werden können. So wird beispielsweise von einem Color Resist während seiner Verarbeitung gefordert, dass er in einem organischen Lösungsmittel wie Methoxypropylacetat gut löslich ist und sich in einer alkalischen, wässrigen Lösung, die Tenside enthalten kann, schnell löst. Die entsprechend zum Einsatz kommenden erfindungsgemäßen Zusammensetzungen haben dabei direkten Einfluss auf die Eigenschaften des Endprodukts.

Dies gilt auch für die Herstellung von pigmentierten Lacken, für deren Verarbeitung trotz hoher Pigmentbeladung eine niedrige Viskosität gefordert wird. Insbesondere wird eine hohe Viskositätsreduzierung für hochgefüllte Kunststoff-Massen gefordert, damit diese bei maximalem Füllstoffgehalt fließfähig und gut verarbeitbar bleiben. Die erfindungsgemäßen Zusammensetzungen erfüllen diese und darüber hinaus gehende Anforderungen, so dass sie für eine Vielzahl von Anwendungen problemlos und mit verbesserten Eigenschaften eingesetzt werden können. Hierzu ist beispielsweise das komplexe Phänomen der Haftung von Beschichtungen zu zählen, welches die Adhäsionshaftung von Beschichtungen auf einem gegebenenfalls vorbehandelten Substrat, insbesondere einem metallischen Substrat, Glas oder Kunststoffen, die Adhäsionshaftung von Beschichtungen auf anderen Beschichtungen, insbesondere Altlacken, Basislacken und kathodischen Elektrotauchlacken und die interne Kohäsionshaftung einer Beschichtung oder Kunststoffmasse mit sich selbst umfassen kann. Durch die geeignete Wahl des Netz-und/oder Dispergiermittels lassen sich insbesondere die Kohäsionshaftung und die Adhäsionshaftung positiv beeinflussen, weil die Teilchenbenetzung verbessert, die Vermittlung zwischen organischer Matrix und Pigmenten und Füllstoffen gesteigert und Trenneffekte gezielt vermieden werden können.

So können die erfindungsgemäßen Polyether beziehungsweise die erfindungsgemäßen Netz- und/oder Dispergiermittel beispielsweise bei der Herstellung oder Verarbeitung von Lacken, Druckfarben, Papierstrich, Leder- und Textilfarben, Pasten, Pigmentkonzentraten, Keramiken oder kosmetischen Zubereitungen eingesetzt werden, wenn diese als Feststoffe Pigmente und/oder Füllstoffe enthalten.

Auch bei der Herstellung oder Verarbeitung von Gieß- und/oder Formmassen auf Basis von synthetischen, halbsynthetischen oder natürlichen makromolekularen Stoffen, wie zum Beispiel Polyvinylchlorid, gesättigten oder ungesättigten Polyestern, Polyurethanen, Polystyrol, Polyacrylaten, Polyamiden, Epoxidharzen, Polyolefinen wie Polyethylen oder Polypropylen können sie eingesetzt werden. Beispielsweise lassen sich die erfindungsgemäßen Zusammensetzungen, die dispergierte Pigmente und/oder Füllstoffe und gegebenenfalls andere Additive enthalten, in Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, gegebenenfalls nach Zugabe weiterer Bindemittel sehr gut verteilen. Beispiele für übliche weitere Bindemittel sind Harze auf Basis von Polyurethanen, Cellulosenitraten, Celluloseacetobutyraten, Alkydharzen, Melaminharzen, Polyestern, Chlorkautschuken, Epoxidharzen und Polyacrylaten.

Beispiele für Beschichtungsformulierungen auf Wasserbasis sind kathodische oder anodische Elektrotauchlacke zum Beispiel für Automobilkarossen. Weitere Beispiele sind Putze, Silikatfarben, Dispersionsfarben, Wasserlacke auf Basis von wasserverdünnbaren Alkydharzen, Alkydharzemulsionen, Hybridsystemen, 2-Komponenten-Systemen, Polyurethan- und Acrylatharz-Dispersionen.

Die erfindungsgemäßen Zusammensetzungen eignen sich insbesondere auch als Grundlage für Feststoffkonzentrate, wie zum Beispiel Pigmentkonzentrate. Dazu werden die vorstehend beschriebenen Copolymere in einem Dispergiermedium wie organischen Lösemitteln, Weichmachern und/oder Wasser vorgelegt und die zu dispergierenden Feststoffe, vorzugsweise Pigmente und/oder Füllstoffe unter Rühren zugegeben. Zusätzlich können diesen Zusammensetzungen weitere Bindemittel und/oder andere Hilfsstoffe hinzugefügt werden. Vorzugsweise gewährleisten aber Zusammensetzungen die von anderen Bindemitteln als den erfindungsgemäßen Netz- und/oder Dispergiermitteln frei sind bereits stabile Pigmentkonzentrate.

Ebenso ist es möglich, die erfindungsgemäßen Zusammensetzungen als fließfähige Feststoffkonzentrate einzusetzen. Dazu werden Pigmentpresskuchen, die noch organische Lösemittel, Weichmacher und/oder Wasser enthalten können, mit erfindungsgemäßen Netz- und/oder Dispergiermitteln gemischt und die so erhaltene Mischung dispergiert. Die auf verschiedenen Wegen hergestellten erfindungsgemäßen Feststoffkonzentrate können dann in unterschiedliche

Zusammensetzungen wie z. B. Alkydharze, Polyesterharze, Acrylatharze, Polyurethanharze oder Epoxidharze eingearbeitet werden. Pigmente können aber auch wasser- beziehungsweise lösemittelfrei direkt mit erfindungsgemäßen Netz-und/oder Dispergiermitteln dispergiert werden. Diese erfindungsgemäßen Zusammensetzungen eignen sich dann besonders zur Pigmentierung von thermoplastischen und duroplastischen Kunststoffformulierungen.

Die erfindungsgemäßen Zusammensetzungen können vorteilhaft auch bei der Herstellung von Tinten für "Non-Impact"-Druckverfahren wie "Thermal-Inkjet"- und dem "Bubblejet"-Verfahren verwendet werden. Diese Tinten können beispielsweise wässrige Tintenformulierungen, lösemittelbasierte Tintenformulierungen, lösemittelfreie oder lösemittelarme Tinten für UV-Applikationen als auch wachsartige Tinten sein.

Die erfindungsgemäßen Zusammensetzungen können auch bei der Herstellung von Farbfiltern für Flüssigkristall-Anzeigen und Flüssigkristall-Bildschirme, Farbauflösungsgeräte, Sensoren, Plasmabildschirme, Anzeigen auf Basis der SEDs (Surface-Conduction-Electron-Emitter-Displays) und für MLCCs (Multi-Layer-Ceramic-Compounds) verwendet werden. Hierbei kann der flüssige Farbfilterlack, der auch Color Resist genannt wird, durch verschiedenste Applikationsverfahren wie Spin Coating, Aufrakeln, Kombination beider oder über "Non-Impact"-Druckverfahren wie zum Beispiel Inkjet-Verfahren aufgetragen werden. Die MLCC-Technologie wird bei der Herstellung von Mikrochips und Leiterplatten verwendet.

Die erfindungsgemäßen Zusammensetzungen können auch in kosmetischen Zubereitungen wie zum Beispiel in Make-Up, Pudern, Lippenstiften, Haarfärbemitteln, Cremes, Nagellacken und Sonnenschutzpräparaten verwendet werden. Diese können in den üblichen Formen vorliegen. Die erfindungsgemäßen Zubereitungen enthaltend die vorstehend definierten erfindungsgemäßen Polyether als Netz- und/oder Dispergiermittel für Pigmente wie Titandioxid oder Eisenoxid und können in die in der Kosmetik üblichen Trägermedien, wie zum Beispiel in Wasser, Ricinusöle oder in Silikonöle eingearbeitet werden.

Ein weiterer Gegenstand der vorliegenden Erfindung ist auch die Verwendung eines oder mehrerer der erfindungsgemäßen Polyether als oder in Netz- und/oder Dispergiermitteln für Feststoffe, besonders bevorzugt für Pigmente und/oder Füllstoffe oder als Phasenvermittler. Diese erfindungsgemäßen Pigmentdispersionen enthaltend erfindungsgemäße Zusammensetzungen können zur Herstellung eines pigmentierten Überzugs auf einem Substrat eingesetzt werden, wobei der Pigmentlack auf das Substrat aufgebracht und dort eingebrannt oder ausgehärtet beziehungsweise vernetzt wird.

Ein weiterer Gegenstand der vorliegenden Erfindung sind daher Überzugsmittelzusammensetzungen, Pasten und Formmassen enthaltend die erfindungsgemäßen Zusammensetzungen beziehungsweise die erfindungsgemäßen Polyether beziehungsweise die erfindungsgemäßen Netz- und/oder Dispergiermittel und ein oder mehrere dispergierte Pigmente, organische Lösemittel und/oder Wasser, sowie gegebenenfalls weitere Bindemittel einschließlich lacküblicher Hilfsstoffe

Aus den erfindungsgemäßen Pigmentdispersionen können auch erfindungsgemäße Pigmentpasten basierend darauf hergestellt werden.

Die erfindungsgemäßen Zusammensetzungen können alleine oder zusammen mit weiteren üblichen Bindemitteln eingesetzt werden. Beim Einsatz in Polyolefinen kann es z. B. vorteilhaft sein entsprechende niedermolekulare Polyolefine als Trägermaterialien den erfindungsgemäßen Zusammensetzungen zuzusetzen.

Ein weiterer Gegenstand der Erfindung betrifft auch pulverpartikel- und/oder faserpartikelförmige Feststoffe, insbesondere von Pigmenten oder Füllstoffen wie Kunststofffüllstoffen, die mit erfindungsgemäßen Polyethern beziehungsweise erfindungsgemäßen Netz- und/oder Dispergiermitteln beschichtet sind. Diese Beschichtung von organischen oder anorganischen Feststoffen kann in bekannter Weise ausgeführt werden, wie sie z. B. in EP-A-0 270 126 beschrieben werden. Aus den so erhaltenen erfindungsgemäßen Zusammensetzungen kann das Dispergiermedium entweder entfernt oder unter Bildung von Pasten verbleiben. Bei Pigmenten kann diese Beschichtung der Pigmentoberfläche während oder nach der Synthese der Pigmente erfolgen, beispielsweise durch Zusatz der erfindungsgemäßen Polyether oder der erfindungsgemäßen Netz- und/oder Dispergiermittel zur Pigmentsuspension oder während oder nach dem Pigmentfinish.

Die auf diese Weise erhaltenen erfindungsgemäßen Zusammensetzungen eignen sich als vorbehandelte Pigmente oder Füllstoffe sehr gut zum Einarbeiten und zeichnen sich durch ein verbessertes Viskositäts-, Flockulations- und Glanzverhalten und durch höhere Farbstärke gegenüber nicht behandelten Pigmenten aus.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb,

Bismut-vanadat-molybdatgelb oder Chromtitangelb). Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein.

Weitere Beispiele für partikelförmige Feststoffe sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden beziehungsweise Metall- und/oder Halbmetallhydroxiden bestehen. Beispielsweise lassen sich die Oxide und/oder Oxidhydroxide und/oder Hydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sogenannte Hybrid-Partikel handeln, die aus einem anorganischen Kern und einer organischen Hülle - oder umgekehrt - bestehen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie zum Beispiel Aluminium- oder Magnesiumhydroxid und Mattierungsmittel wie zum Beispiel Kieselsäuren lassen sich ebenfalls hervorragend dispergieren und stabilisieren.

Ebenfalls Gegenstand dieser Erfindung ist die Verwendung der erfindungsgemäßen Netz- und Dispergiermittel in sogenannten Sheet-Molding-Compounds (SMC) und Bulk-Molding-Compounds (BMC), die aus faserverstärkten und füllstoffhaltigen reaktiven Harzen bestehen die in einer heißen Form unter Druck zu einem Formteil ausgehärtet werden. Als Fasern finden neben Glasfasern auch Carbonfasern, Basaltfasern und Naturfasern sowie weiteren Verstärkungsfasern, eingesetzt als lose Faserschnipsel, gerichtete Endlosfasern, Fasermatten, -gelegen, -gestricken, in einer oder mehreren Lagen Verwendung.

Verwendung, als Harzkomponenten finden unter anderem ungesättigte Polyester, Vinylester oder Epoxidharze, die ebenfalls mit weiteren Harzkomponenten in Hybridsytemen eingesetzt werden können. Viele der Formulierungen enthalten Füllstoffe wie Kreide, Ton, Bariumsulfat, Aluminiumtrihydroxid oder Magnesiumhydroxid, die getrennt oder in Mischungen Einsatz finden.

Die Herstellung und Verarbeitung solcher Formmassen ist exemplarisch am Beispiel der ungesättigten Polyester in der DE3643007 und in der Monographie von P.F. Bruins, "Unsaturated Polyester Technology", Gordon and Breach Science Publishers 1976, Seiten 211 bis 238, beschrieben.

Die Erhöhung von Faser- und Füllstoffgehalt dienen oftmals der Erhöhung der Steifigkeit und der Verbesserung der Oberflächenqualität. Die dadurch steigende Viskosität der Harz/Füllstoff-Gemische ist so hoch, dass in konventionellen Systemen die Oberflächenbenetzung der Verstärkungsfasern nicht mehr vollständig und einwandfrei stattfindet, die Entlüftung des Gemisches verschlechtert wird und sogar die Topfzeit des Systems verkürzt werden kann. In solchen Fällen führt dies zu einer qualitativen Verschlechterung der mechanischen Eigenschaften wie beispielsweise der Zug- oder Biegefestigkeit beim finalen Formteil.

Der Einsatz der erfindungsgemäßen Netz- und Dispergiermittel resultiert in einer signifikanten Reduktion der Viskosität der Harz-Füllstoff-Gemische, so dass selbst bei Formulierungen mit hohem Füllstoffgehalt eine einwandfreie Faserbenetzung und Tränkung sichergestellt ist.

So ist es durch den Einsatz der erfindungsgemäßen Netz- und Dispergiermittel ebenfalls möglich, die Menge an einsetzbaren Flammschutzmitteln wie beispielsweise Aluminiumtrihydroxid oder Magnesiumhydroxid soweit anzuheben, dass eine deutliche Verbesserung der flammhemmenden Eigenschaften im ausgehärteten Formteil möglich ist. Dies führt zu einer Einstufung solcher Bauteile in einer höherwertigen Brandschutzklasse, messbar beispielsweise nach der UL 94-Methode der Underwriters Laboratories (gemäß DIN EN 60695-11-10) oder gemäß anderer, typischerweise im Transportwesen verwendeter Methoden (siehe beispielsweise "Brandverhalten von Baustoffen und Bauteilen", DIN 4102) und ermöglicht so neue, weitere Einsatzgebiete solcher SMC- und BMC-Formteile.

**BEISPIELE**

*Abkürzungen*

MeOH = Methanol
BuOH = n-Butanol
MPG = Phenoxyethanol

MPEG 500/750 = Methoxypoly(ethylenglykol) (zahlenmittleres Molekulargewicht $M_n$ = 500 g/mol bzw. 750 g/mol)
Ethylenoxid = EO
Propylenoxid = PO
3-Ethyl-3-((phenoxy)methyl)-oxetan = PhOx
3-Ethyl-3-((2-ethylhexyloxy)methyl)-oxetan = 2-EHOx
3-Ethyl-3-(hydroxymethyl)oxetan = TMPOx
3-Ethyl-3-(polytri(oxyethylen)hydroxymethyl)oxetan = 3EO-TMPOx

Zur Untersuchung der Reaktionsgeschwindigkeit der ringöffnenden OxetanPolymerisation unter den unten beschriebenen Bedingungen wurden online-IR-Messungen mit einem ABB MB-Rx Instrument, ausgerüstet mit einer ATR Stabmesssonde mit Diamant-Kristall, durchgeführt. Hierbei wurde gefunden, dass bei den gewählten Reaktionsbedingungen keine Monomerakkumulation auftritt. Die während der Dosierung vorhandenen Monomersignale, die der Oxetanfunktion zugeordnet wurden, verschwinden unter den gewählten Reaktionsbedingungen innerhalb von wenigen Minuten, weshalb dann ein vollständiger Monomerumsatz angenommen werden darf. Entsprechende titrimetische Messungen der Oxetanzahl bestätigten die vollständige Umsetzung der Oxetanmonomere.

Zur Charakterisierung der erfindungsgemäßen Polyether wurden folgende Messmethoden eingesetzt:

*Titration der Oxetangruppen zur Endpunktbestimmung*

Ca. 0,03 bis 0,04 Gramm der Probe wurden in ein 80 ml-Becherglas genau eingewogen und in 10 ml Chloroform und 40 ml konzentrierter Essigsäure gelöst. Die Probe wurde auf 50°C erwärmt (15 min im Thermoblock). Nach Zugabe von 2.5 g Cetyltrimethylammoniumbromid wurde die Probe auf den Magnetrührer gestellt, die Elektrode gut eingetaucht und heiß mit 0.1 n essigsaurer Perchlorsäure titriert. Bei einem Äquivalentgewicht von > 30.000 wird die Umsetzung als vollständig angesehen.

$$\text{Oxetanäquivalent} = \text{Einwaage (g)} * 1000 / (\text{Verbrauch (ml)} * n * f)$$

n = Normalität des Titrationsmittels
f = Faktor des Titrationsmittels

*Gelpermeationschromatographie (GPC)*

Die Gelpermeationschromatographie wurde bei 40 °C unter Verwendung einer Hochdruckflüssigkeitschromatographiepumpe (Bishoff HPLC 2200) unter einem refraktiven Indexdetektor (Waters 410) durchgeführt. Das Laufmittel war Tetrahydrofuran mit einer Fließgeschwindigkeit von 1 mm/min. Mit Hilfe von Polystyrolstandards wurde eine konventionelle Kalibrierung erzielt. Das Zahlenmittel des Molekulargewichts Mn, das Gewichtsmittel des Molekulargewichts Mw und die Polydispersität $P_D$ = Mw/Mn, wurde gem. dem Programm NTeqGPC berechnet.

*NMR-Messung*

Die NMR-Messungen wurden auf einem Bruker DPX 300 bei 300 MHz ($^1H$) bzw. 75 MHz ($^{13}C$) durchgeführt. Als Lösungsmittel wurde deuteriertes Chloroform ($CDCl_3$) und deuteriertes Dimethylsulfoxid (DMSO-$d_6$) verwendet.

In den folgenden Abschnitten wird die Herstellung der erfindungsgemäß zum Einsatz kommenden Polyether durch entsprechende Verfahren erläutert. Ein Überblick über die Strukturvariationen der Polyether der erfindungsgemäßen Beispiele **1** bis **12** und der Vergleichsbeispiele **13*** und **14*** ist Tabelle 1 entnehmbar.

Tabelle 1

| **Bsp.** | Starterverbindung (VI) | Oxetane (VII) | Gruppe T | $M_w$ (GPC in THF) | $P_D$ (Mw/Mn) |
|---|---|---|---|---|---|
| **1** | $CH_3O-(CH_2-CH_2-O)_{16}-H$ | *stat.* 2 PhOx / 1 2-EHOx | $-P(O)(OH)_2$ | 1655 | 1,11 |
| **2** | $CH_3O-(CH_2-CH_2-O)_{10}-H$ | 3 PhOx | $-P(O)(OH)_2$ | 1584 | 1,14 |
| **3** | $C_4H_9O$-[*stat.*-$(EO)_{31}$/ $(PO)_9$]-H | *stat.* 2 PhOx / 1 2-EHOx | $-P(O)(OH)_2$ | 2264 | 1,26 |
| **4** | $C_6H_5O-(CH_2-CH_2-O)_8-H$ | 3 PhOx | $-P(O)(OH)_2$ | 1077 | 1,25 |

(fortgesetzt)

| Bsp. | Starterverbindung (VI) | Oxetane (VII) | Gruppe T | $M_w$ (GPC in THF) | $P_D$ (Mw/Mn) |
|---|---|---|---|---|---|
| **5** | $C_{10}H_{21}O-(CH_2-CH_2-O)_{11}-H$ | 2 3EO-TMPOx | $-P(O)(OH)_2$ | 1159 | 1,24 |
| **6** | $CH_3O$-[*stat.*-$(EO)_{31}$/ $(PO)_9$]-H | 2 TMPOx | $-P(O)(OH)_2$ | 2080 | 1,25 |
| **7** | $CH_3O-(CH_2-CH_2-O)_{16}-H$ | 1 TMPOx | $(-CO(CH_2)_5O)_{1,5}-P(O)(OH)_2$ | 1287 | 1,26 |
| **8** | $C_{10}H_{21}O-(CH_2-CH_2-O)_{11}-H$ | *stat.* 2 TMPOx / 3 PhOx | $-P(O)(OH)_2$ | 1468 | 1,32 |
| **9** | $C_4H_9O$-[*stat.*-$(EO)_{31}$/ $(PO)_9$]-H | 2 3EO-TMPOx | $-P(O)(OH)_2$ | 2566 | 1,29 |
| **10** | $C_{10}H_{21}O-(CH_2-CH_2-O)_8-H$ | 1 TMPOx | $(-CO(CH_2)_5O)_2-P(O)(OH)_2$ | 1114 | 1,48 |
| **11** | $CH_3O$-[*stat.*-$(EO)_{31}$/ $(PO)_9$]-H | 2 TMPOx | $(-CO(CH_2)_5O)_2--P(O)(OH)_2$ | 2122 | 1,48 |
| **12** | $CH_3O-(CH_2-CH_2-O)_{22}-H$ | 1 TMPOx | $-P(O)(OH)_2$ | 1124 | 1,20 |
| **13*** | $C_{10}H_{21}O-(CH_2-CH_2-O)_{11}H$ | 2 3EO-TMPOx | H | 970 | 1,20 |
| **14*** | $C_{10}H_{21}O-(CH_2-CH_2-O)_{11}-H$ | 2 TMPOx | H | 841 | 1,15 |
| *Vergleichsbeispiele (keine polymeranaloge nachträgliche Umsetzung endständiger Hydroxylgruppen) | | | | | |

**Synthesebeispiel S1 - "linearer Polyether (Beispiel 2)"**

Zur Herstellung des Dispergiermittels wurden in einen 250 ml 4-Halskolben, ausgestattet mit Rührer, Kühler, Thermometer und Tropftrichter 50,0 g (0,1 mol) MPEG 500 (Methanol gestarteter monohydroxyfunktionelle EO-Polyether, Mn 500 g/mol von Clariant) mit 30 mg lonol CP unter Überleitung von Stickstoff auf 85°C erhitzt. Nach 20 min werden der Mischung 120 mg PW12 (12-Wolframatophosphorsäure-Hydrate, Sigma Aldrich P4006, CAS 12501-23-4) zugegeben. Anschließend wurden sehr langsam (innerhalb von 4h) 57,6 g (0,3 mol) PhOx über einen Tropftrichter zugetropft. Die Reaktionsmischung blieb während des Versuchs farblos bis schwach gelblich. Nach 2 h Nachreaktionszeit wurde die Mischung abgekühlt und mit Natriumhydrogencarbonat neutralisiert. Das Gemisch wurde anschließend filtriert.

15,0 g (etwa 13,9 mmol) des Blockcopolymeren wurden in einen 250 ml 4-Halskolben, ausgestattet mit Rührer, Kühler und Thermometer zusammen mit 1,56 g (4,6 mmol) Polyphosphorsäure (Molmasse formell bezogen auf Tetrapolyphosphorsäure) eingewogen. Unter Stickstoff wurde bei 80 °C 3 h lang gerührt. Das Produkt wird als zähes Öl im Gemisch mit freier Phosphorsäure erhalten.

**Synthesebeispiel S2 - "verzweigter, blockartiger Polyether (Beispiel 8)"**

Zur Herstellung des Dispergiermittels wurden in einen 250 ml 4-Halskolben, ausgestattet mit Rührer, Kühler, Thermometer und Tropftrichter 12,4 g (0,02 mol) Lutensol ON 110, (C10-Oxoalkohol gestarteter monohydroxyfunktioneller EO-Polyether, Mn 625 g/mol von BASF) mit 30 mg lonol CP unter Überleitung von Stickstoff auf 85 °C erhitzt. Nach 20min werden der Mischung 30 mg PW12 (12-Wolframatophosphorsäure-Hydrate, Sigma Aldrich P4006, CAS 12501-23-4) zugegeben. Anschließend wurden sehr langsam (innerhalb von 1 h) 4,8g (0,04 mol) TMPO zugegeben. Nach einer isothermen Reaktionsphase von 30min wurden 12,6 g (0,065 mol) PhOx über einen Tropftrichter langsam zugetropft. Die Reaktionsmischung blieb während des Versuchs farblos bis schwach gelblich und homogen. Nach 2 h Nachreaktionszeit wurde die Mischung abgekühlt und mit Natriumhydrogencarbonat neutralisiert. Das Gemisch wurde anschließend in 30 mL THF verdünnt, filtriert und am Rotationsverdampfer (65 °C, 30 mbar) vom Lösungsmittel befreit.

15,0 g (etwa 19,8 mmol) des Blockcopolymeren wurden in einen 250 ml 4-Halskolben, ausgestattet mit Rührer, Kühler und Thermometer zusammen mit 2,23 g (6,6 mmol) Polyphosphorsäure (Molmasse formell bezogen auf Tetrapolyphosphorsäure) eingewogen. Unter Stickstoff wurden bei 80°C 3 h lang gerührt. Das Produkt wird als zähes Öl im Gemisch mit freier Phosphorsäure erhalten.

**Synthesebeispiel S3 - Grafting durch Addition von epsilon-Caprolacton (Vorstufe zu Beispiel 7)**

205,0 g (etwa 0,19 mol) eines Additionsprodukts aus MPEG 750 und einem Äquivalent TMOPx (OHZ = 102,4 mg KOH/g) wurden mit 42,6g (0,37mol) epsilon-Caprolacton in einem 500 ml 4-Halskolben ausgestattet mit Rührer, Kühler und Thermometer vorgelegt und auf 90 °C unter leichtem Stickstoff-Strom erwärmt. Es wurden 0,3 g Dodecylbenzolsulfonsäure als Katalysator zugegeben. Die Caprolactonumsetzung wurde mittels Festkörperbestimmung (20 min bei 150 °C) kontrolliert. Nach 12h wurde die Reaktion bei 99% Festkörper abgekühlt und das leicht gelbliche Produkt abgefüllt. Auf eine Neutralisation des Produkts zum Beispiel durch Zugabe von Aminen, basischen Ionentauschern oder wässrige Aufarbeitung wurde verzichtet, weil die nachfolgende Phosphatierung ohnehin im stark sauren Milieu analog zu Synthesebeispiel S2 verläuft.

**Vergleichsbeispiele 15* und 16* (nicht erfindungsgemäß)**

Als nicht erfindungsgemäßes Vergleichsbeispiel aus dem Stand der Technik wurden die Vermittleradditiv-Beispiele 13 und 36 der US 2013/289195 A1 herangezogen. Es handelt sich dabei jeweils um Oxetan-haltige Copolymere mit carbonsäurefunktionalisierten Endgruppen.

**ANWENDUNGSBEISPIELE**

**Anwendung der erfindungsgemäßen Polyether als Netz- und Dispergieradditive für anorganische Füllstoffe und Flammschutzmittel in hochgefüllten SMC/BMC-Massen**

In den nachfolgenden Anwendungsbeispielen wurde die Anwendung der erfindungsgemäß zum Einsatz kommenden Dispergiermittel im Vergleich zu nicht erfindungsgemäß verwendbaren Dispergiermittel als Additive in füllstoffhaltigen und/oder flammgeschützten ungesättigten Polyestersystemen getestet und bewertet.

| Rohstoffe | Beschreibung |
|---|---|
| Palapreg P 17-02 | Ungesättigtes Polyesterharz aus Orthophthalsäure und Standard-Glykole, gelöst in Styrol. Hersteller: DSM Composite Resin AG |
| Palapreg H 814-01 | Lösung von Polystyrol (PS) in Styrol. Hersteller: DSM Composite Resin AG |
| Palapreg P 18-03 | Ungesättigtes Polyesterharz aus Maleinsäure und Glykol, in Styrol gelöst. Hersteller: DSM Composite Resin AG |
| Palapreg H 2681-01 | Lösung eines modifizierten gesättigten Polyesters in Styrol. Hersteller: DSM Composite Resin AG |
| Palapreg H 1080-01 | Lösung eines thermoplastischen PVA (Polyvinylalkohol) in Styrol. Hersteller: DSM Composite Resin AG |
| Zn 101/06 | Zinkstearat |
| Ceasit 1 | Calciumstearat |
| Millicarb OG | Calciumcarbonat Füllstoff. Hersteller: OMYA |
| Martinaol ON 912 | Aluminiumtrihydroxid - Füllstoff. Hersteller: Martinswerk |

In den nachfolgenden Anwendungsbeispielen wurde die Anwendung der erfindungsgemäß zum Einsatz kommenden Dispergiermittel im Vergleich zum nicht erfindungsgemäßen Standard-Dispergiermittel V2 (Beispiel 12 aus EP 417490 B1) als Additiv in füllstoffhaltigen ungesättigten Polyesterharzen getestet.

Zum Vergleich der Wirkung der Wirksamkeit der erfindungsgemäßen Verbindungen mit dem nicht erfindungsgemäßen Standard-Dispergiermittel, das für diese Anwendung den Stand der Technik darstellt, wurden verschiedene Formulierungen mit den Verbindungen hergestellt und die Viskosität dieser Formulierung vergleichend mit einem Viskosimeter (Brookfield BV II, Spindel 5-6, 10 bis 20 U/Min) gemessen.

Die verwendeten Formulierungen wurden wie folgt hergestellt:
Die Harzkomponenten wurden vorgelegt und mittels Spatel homogenisiert. Anschließend wurden die erfindungsgemäßen Verbindungen oder die nicht erfindungsgemäßen Standard-Dispergiermittel zugegeben und ebenfalls durch händisches Rühren mit einem Spatel homogenisiert. Je nach Formulierung wird das Prozessadditiv oder Calium- oder

Zinkstearat zugegeben und untergerührt. Zu dieser flüssigen Formulierung wurde der Füllstoff gegeben und mit einem Schnellrührer TYPE Pendraulik- 5HWM-FDe80N 12-2 (mit einer Dissolverscheibe, Durchmesser 40 ± 10 mm) unter den folgenden Bedingungen dispergiert: 60 Sekunden. ± 10 Sek. mit einer Geschwindigkeit von 930rpm ± 50 rpm, dann für weitere 120s. ± 10 Sek. bei einer Geschwindigkeit von 1865 Umdrehungen pro Minute ± 125rpm (Umfangsgeschwindigkeit 3,9 ± 0,3 m / s). Die fertig homogenisierte Formulierung wird in einem verschließbaren Aluminiumbecher überführt, verschlossen und für 30 Minuten ± 5 Minuten bei einer Temperatur von 30 ° C ± 5 ° C in einem Wasserbad bis zur Viskositätsmessung gelagert.

Formulierung 1

| | |
|---|---|
| 70 | Teile Palapreg P 17-02 |
| 30 | Teile Palapreg H 814-01 |
| 4,5 | Teile Zn 101/06 |
| 180 | Teile Millicarb OG |
| 0-2 | Teile Netz- und Dispergiermittel (erfindungsgemäß oder nicht erfindungsgemäß) |

**Tabelle 2**

| Netz- und Dispergiermittel | Einsatzmenge Netz- und Dispergieradditiv | Viskosität der Formulierung [Pa s] |
|---|---|---|
| Kontrolle (nicht erfindungsgemäß) | 0 | 83,8 |
| 6 | 1 | 33,2 |
| 7 | 1 | 37,0 |
| 9 | 1 | 34,7 |
| 10 | 1 | 38,6 |
| 12 | 1 | 38,4 |
| 6 | 2 | 28,1 |
| 9 | 2 | 34,5 |
| 12 | 2 | 25,7 |
| 14* (nicht erfindungsgemäß) | 1 | 77,2 |
| 14* (nicht erfindungsgemäß) | 2 | 69,0 |
| 15* (nicht erfindungsgemäß) | 1 | 79,1 |
| 15* (nicht erfindungsgemäß) | 2 | 72,2 |
| 16* (nicht erfindungsgemäß) | 1 | 78,7 |
| 16* (nicht erfindungsgemäß) | 2 | 75,6 |

Wie Tabelle 2 entnehmbar ist, besitzen die unter Verwendung der erfindungsgemäßen Netz- und/oder Dispergieradditive hergestellten Formulierungen eine deutlich geringere Viskositiät und somit eine bessere Verarbeitbarkeit.

Formulierung 2

| | |
|---|---|
| 70 | Teile Palapreg P 17-02 |
| 30 | Teile Palapreg H 814-01 |
| 4,5 | Teile Zn 101/06 |
| 100 | Teile Millicarb OG |

(fortgesetzt)

100 Teile Martinal ON 912
0-2 Teile Netz- und Dispergiermittel (erfindungsgemäß oder nicht erfindungsgemäß)

**Tabelle 3**

| Netz- und Dispergiermittel | Einsatzmenge Netz- und Dispergieradditiv | Viskosität der Formulierung [Pa s] |
|---|---|---|
| Kontrolle (nicht erfindungsgemäß) | 0 | 84,2 |
| 6 | 1 | 41,7 |
| 7 | 1 | 39,7 |
| 9 | 1 | 34,2 |
| 12 | 1 | 35,5 |
| 14* (nicht erfindungsgemäß) | 1 | 71,6 |
| 15* (nicht erfindungsgemäß) | 1 | 69,2 |
| 16* (nicht erfindungsgemäß) | 1 | 74,7 |

Wie Tabelle 3 entnehmbar ist, besitzen die unter Verwendung der erfindungsgemäßen Netz- und/oder Dispergieradditive hergestellten Formulierungen eine deutlich geringere Viskositiät und somit eine bessere Verarbeitbarkeit.

<u>Formulierung 3</u>

70 Teile Palapreg P 17-02
30 Teile Palapreg H 814-01
4,5 Teile Zn 101/06
280 Teile Martinal ON 912
0-2 Teile Netz- und Dispergiermittel (erfindungsgemäß oder nicht erfindungsgemäß)

**Tabelle 4**

| Netz- und Dispergiermittel | Einsatzmenge Netz- und Dispergieradditiv | Viskosität der Formulierung [Pa s] |
|---|---|---|
| Kontrolle (nicht erfindungsgemäß) | 0 | 320 |
| 6 | 1 | 136 |
| 9 | 1 | 180 |
| 12 | 1 | 114 |
| 6 | 2 | 72,9 |
| 9 | 2 | 84,3 |
| 12 | 2 | 59,2 |
| 14* (nicht erfindungsgemäß) | 1 | 229 |
| 14* (nicht erfindungsgemäß) | 2 | 196 |

Wie Tabelle 4 entnehmbar ist, besitzen die unter Verwendung der erfindungsgemäßen Netz- und/oder Dispergieradditive hergestellten Formulierungen eine deutlich geringere Viskositiät und somit eine bessere Verarbeitbarkeit.

Formulierung 4

68 Teile Palapreg P 18-03
30 Teile Palapreg H 2681-01
2 Teile Palapreg H1080-1
4,5 Teile Ceasit 1
210 Teile Millicarb OG
0-2 Teile Netz- und Dispergiermittel (erfindungsgemäß oder nicht erfindungsgemäß)

**Tabelle 5**

| Netz- und Dispergiermittel | Einsatzmenge Netz- und Dispergieradditiv | Viskosität der Formulierung [Pa s] |
|---|---|---|
| Kontrolle (nicht erfindungsgemäß) | 0 | 163 |
| 6 | 1,5 | 91,2 |

Wie Tabelle 5 entnehmbar ist, besitzen die unter Verwendung der erfindungsgemäßen Netz- und/oder Dispergieradditive hergestellten Formulierungen eine deutlich geringere Viskositiät und somit eine bessere Verarbeitbarkeit.

## Patentansprüche

1. Polyether der allgemeinen Formel (I):

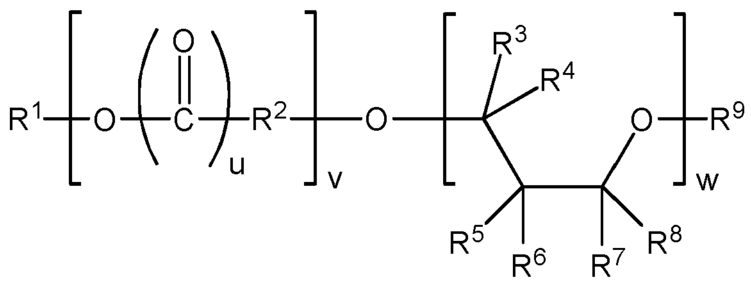

(I)

worin

u für 0 oder 1 steht
v für 1 bis 60 steht,
w für 1 bis 20 steht,
$R^1$ für einen einwertigen organischen Rest mit 1 bis 100 Kohlenstoffatomen steht,
$R^2$ für einen zweiwertigen organischen Rest steht, und der
wenn u = 0 ist für $CHR^{2a}CHR^{2b}$ steht, wobei
$R^{2a}$ und $R^{2b}$ unabhängig voneinander für
Wasserstoff, oder
einwertige organische Reste gewählt aus der Gruppe bestehend aus
aliphatischen Resten mit 1 bis 8 Kohlenstoffatomen, aromatischen Resten mit 6 bis 8 Kohlenstoffatomen, oder araliphatischen Resten mit 7 bis 10 Kohlenstoffatomen stehen; und der
wenn u = 1 ist für einen aliphatischen Rest mit 2 bis 24 Kohlenstoffatomen steht;
$R^3$, $R^4$, $R^7$ und $R^8$ unabhängig voneinander für
Wasserstoff, oder
einwertige organische Reste stehen und gewählt werden aus der Gruppe bestehend aus
aliphatischen Resten mit 1 bis 8 Kohlenstoffatomen, aromatischen Resten mit 6 bis 8 Kohlenstoffatomen, oder

araliphatischen Resten mit 7 bis 10 Kohlenstoffatomen,
$R^5$ für einen Rest $R^{5a}$ oder $R^{5b}$ steht, und

$R^{5a}$ für einen einwertigen organischen Rest steht und der gewählt ist aus der Gruppe bestehend aus aliphatischen Resten mit 1 bis 20 Kohlenstoffatomen, aromatischen Resten mit 6 bis 12 Kohlenstoffatomen, araliphatischen Resten mit 7 bis 24 Kohlenstoffatomen,
$R^{5b}$ für einen Rest $CH_2$-O-$R^{5c}$ steht, worin $R^{5c}$ für Wasserstoff oder einen einwertigen ein oder mehrere Hydroxylgruppen enthaltenden organischen Rest steht und der gewählt ist aus der Gruppe bestehend aus aliphatischen Resten mit 1 bis 24 Kohlenstoffatomen, aromatischen Resten mit 6 bis 14 Kohlenstoffatomen, und araliphatischen Resten mit 7 bis 18 Kohlenstoffatomen,

$R^6$ für Wasserstoff oder einen Rest $R^{5a}$ steht
$R^9$ wie $R^{5c}$ definiert ist und unabhängig von $R^{5c}$ gewählt ist; und

wobei

(a) die Reste $R^1$, $R^2$, $R^3$, $R^4$, $R^{5a}$, $R^6$, $R^7$ und $R^8$ frei sind von Carboxy-, Hydroxy-, Thiol-, Imino- sowie primären und sekundären Aminogruppen,
(b) 10 bis 100 mol-% der über die obigen Reste $R^{5b}$ und $R^9$ eingeführten und/oder durch Abspaltung von hydrolytisch abspaltbaren Resten entstandenen Hydroxylgruppen durch Reste OT ersetzt sind, die gewählt sind aus der Gruppe bestehend aus

Resten $-O-P(O)(OH)_{2-x}(O^{\ominus}Z^{\oplus})_x$, worin x für 0, 1 oder 2 steht,
Resten $-O-S(O_2)(OH)_{1-y}(O^{\ominus}Z^{\oplus})_y$, worin y für 0 oder 1 steht, und
Resten $-O-(C{=}O)_s-(NH)_t-T^a$, worin s für 0 oder 1 und t für 0 oder 1 steht und für den Fall, dass s = 0 ist, auch t = 0 gilt, und worin $T^a$ für einen einwertigen organischen Rest mit 1 bis 100 Kohlenstoffatomen steht, der gegebenenfalls ein oder mehrere der folgenden Reste
COOH,
$COO^{\ominus}Z^{\oplus}$,
$-O-P(O)(OH)_{2-x}(O^{\ominus}Z^{\oplus})_x$ und
$-0-S(O_2)(OH)_{1-y}(O^{\ominus}Z^{\oplus})_y$ enthält,
und die obigen Reste $Z^{\oplus}$ unabhängig voneinander für Alkalimetallkationen, ein Ammoniumion oder protonierte oder quaternisierte Amine stehen, und

(c) mindestens einer der Reste OT mindestens einen der Reste $-O-P(O)(OH)_{2-x}(O^{\ominus}Z^{\oplus})_x$ oder $-O-S(O_2)(OH)_{1-y}(O^{\ominus}Z^{\oplus})_y$ enthält oder aus diesem besteht.

**2.** Polyether gemäß Anspruch 1, worin

u für 0 oder 1 steht,
v für 2 bis 45 steht,
$R^1$ für einen einwertigen aliphatischen Rest mit 1 bis 50 Kohlenstoffatomen oder einen aromatischen Rest mit 6 bis 10 Kohlenstoffatomen steht,
u für 0 oder 1 steht
$R^2$ wenn u = 0 ist für $CHR^{2a}CHR^{2b}$ steht, wobei
$R^{2a}$ und $R^{2b}$ unabhängig voneinander für
Wasserstoff oder einen aliphatischen Rest mit 1 bis 4 Kohlenstoffatomen stehen; und der
wenn u = 1 ist für einen aliphatischen Rest mit 4 bis 6 Kohlenstoffatomen steht;
$R^3$, $R^4$, $R^7$ und $R^8$ für Wasserstoff stehen;
$R^5$ für einen Rest $R^{5a}$ oder $R^{5b}$ steht, und

$R^{5a}$ für einen Rest $CH_2$-O-$R^{5d}$ steht,
worin $R^{5d}$ für einen linearen Alkylrest mit 2 bis 10 Kohlenstoffatomen, einen verzweigten oder cyclischen Alkylrest 4 bis 10 Kohlenstoffatomen, einen Arylrest mit 6 bis 10 Kohlenstoffatomen, einen Arylalkylrest mit 7 bis 14 Kohlenstoffatomen oder einen Alkylarylreste mit 7 bis 14 Kohlenstoffatomen steht, und
$R^{5b}$ für einen Rest $CH_2$-O-$R^{5c}$ steht, worin $R^{5c}$ für
Wasserstoff oder

einen einwertigen ein oder mehrere Hydroxylgruppen enthaltenden organischen Rest steht und der gewählt ist aus der Gruppe bestehend aus
aliphatischen Resten mit 1 bis 24 Kohlenstoffatomen;

$R^6$ für Wasserstoff oder einen Alkylrest mit 1 bis 6 Kohlenstoffatomen steht;
$R^9$ wie $R^{5c}$ definiert ist und unabhängig von $R^{5c}$ gewählt ist; und wobei

10 bis 100 mol-%, der über die obigen Reste $R^{5b}$ und $R^9$ oder durch Abspaltung von hydrolytisch abspaltbaren Resten entstandenen Hydroxylgruppen durch Reste OT ersetzt sind, die gewählt sind aus der Gruppe bestehend aus
Resten $-O-P(O)(OH)_{2-x}(O^{\ominus}Z^{\oplus})_x$ und
Resten $-O-(C=O)_s-(NH)_t-T^a$, worin
$T^a$ für einen einwertigen organischen Rest mit 1 bis 100 Kohlenstoffatomen steht und der mindestens einen Rest $O-P(O)(OH)_{2-x}(O^{\ominus}Z^{\oplus})_x$ enthält; und
x für 0, 1 oder 2, und
s für 0 oder 1 und t für 0 oder 1 steht und für den Fall, dass s = 0 ist, auch t = 0 gilt, und
die Kationen $Z^{\oplus}$ unabhängig voneinander für Alkalimetallkationen, ein Ammoniumion oder protonierte oder quaternisierte Amine stehen.

3. Netz- und/oder Dispergiermittel enthaltend oder bestehend aus Polyethern der Formel (I) wie sie in den Ansprüchen 1 und 2 definiert sind.

4. Verfahren zur Herstellung der Polyether der Ansprüche 1 oder 2 oder der Netz- und/oder Dispergiermittel des Anspruchs 3, wobei ein oder mehrere Monoalkohole der allgemeinen Formel (III)

$R^1$-OH (III)

mit einer oder mehreren Spezies der allgemeinen Formeln (IV), (V) und (Vb)

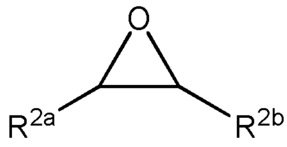
(IV)

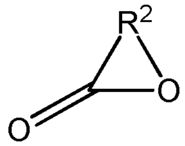
(V)

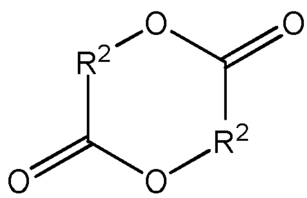
(Vb)

unter Ringöffnungsreaktion oder einer oder mehreren der Spezies der allgemeinen Formel (Va)

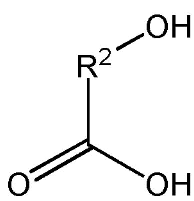
(Va)

in einer Kondensationsreaktion zu Spezies der allgemeinen Formel (VI) umgesetzt werden:

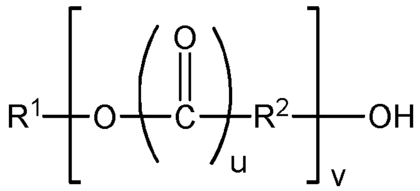

(VI)

wobei bei Verwendung einer oder mehrerer der Spezies der allgemeinen Formel (IV) u = 0 ist und bei Verwendung einer oder mehrerer Spezies der allgemeinen Formeln (V), (Va) oder (Vb) u = 1 ist,
und wobei die Spezies der allgemeinen Formel (VI) mit einer oder mehreren Spezies der allgemeinen Formel (VII)

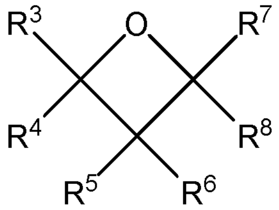

(VII)

unter Ringöffnungsreaktion umgesetzt werden, und
10 bis 100 mol-% der über die Reste $R^5$ und $R^9$ und/oder durch Abspaltung von hydrolytisch abspaltbaren Resten entstandenen Hydroxylgruppen

(i) durch Phosphorylierung und im Falle von x = 1 oder 2 durch nachfolgende Versalzung in Reste $-O-P(O)(OH)_{2-x}(O^{\ominus}Z^{\oplus})_x$ umgesetzt werden, und/oder
(ii) durch Sulfonylierung im Falle von y = 1 durch nachfolgende Versalzung in Reste $-O-S(O_2)(OH)_{1-y}(O^{\ominus}Z^{\oplus})_y$ umgesetzt werden, und/oder
(iii) mit Di- oder Polycarbonsäuren, deren Anhydriden oder Halogeniden umgesetzt, wodurch der Rest $T^a$ ein oder mehrere Rest COOH enthält, die optional durch Versalzung in Reste $COO^{\ominus}Z^{\oplus}$ übergeführt werden,
(iv) mit einer oder mehreren der Spezies der Formeln (IV), (V), (Va) und (Vb) umgesetzt werden und anschließend optional der Phosphorylierung (i) und/oder Sulfonylierung (ii) oder der Umsetzung (iii) unterzogen werden, und/oder
(v) durch Additionsreaktion mit Monoisocyanaten der Formel $T^a$-NCO in Reste $-O-(C=O)_s-(NH)_t-T^a$, worin s = t = 1, umgesetzt werden, und

wobei
die Reste $R^1$, $R^2$, $R^{2a}$, $R^{2b}$, $R^3$, $R^4$, $R^5$, $R^6$, $R^7$, $R^8$, $T^a$ und $Z^{\oplus}$ und die Indizes u, v und x, y wie in Ansprüchen 1 und 2 definiert sind.

**5.** Verfahren nach Anspruch 4, wobei

a. als Spezies der Formel (VII) ausschließlich solche eingesetzt werden, bei welchen alle Reste $R^5$ für Reste $R^{5a}$ stehen oder bei welchen alle Reste $R^5$ für Reste $R^{5b}$ stehen; oder wobei
b. als Spezies der Formel (VII) eine Mischung von Spezies mit Resten $R^{5a}$ und Spezies mit Resten $R^{5b}$ eingesetzt wird; und

die Reste $R^{5a}$ und $R^{5b}$ wie in Anspruch 1 oder 2 definiert sind.

**6.** Verfahren nach Anspruch 5, wobei der Rest $R^{5b}$ eine oder mehrere Hydroxylgruppen und/oder ein oder mehrere Ethersauerstoffatome enthält.

**7.** Verfahren nach Anspruch 6, wobei der Rest $R^{5b}$ mehrere Ethersauerstoffatome enthält, die durch 2 oder 3 Kohlenstoffatome in kürzester Kette mit einem weiteren Ethersauerstoffatom oder einer Hydroxylgruppe verbunden sind, und enthaltene Hydroxylgruppen gegebenenfalls teilweise oder vollständig einer oder mehreren der Umsetzungen

(i), (ii), (iii), (iv) und (v) gemäß Anspruch 4 unterzogen worden sind.

**8.** Verwendung eines oder mehrere der Polyether der allgemeinen Formel (I) gemäß einem der Ansprüche 1 oder 2 oder eines oder mehrerer der Reaktionsprodukte gemäß einem der Ansprüche 4 bis 7 als Netz- und Dispergiermittel für partikelförmige Feststoffe in Zusammensetzungen, die diese enthalten.

**9.** Verwendung gemäß Anspruch 8, wobei es sich bei den partikelförmigen Feststoffen um Pigmente und/oder Füllstoffe handelt.

**10.** Zusammensetzung enthaltend einen oder mehrere der Polyether der allgemeinen Formel (I) gemäß einem der Ansprüche 1 oder 2; oder enthaltend ein oder mehrere Netz- und/oder Dispergiermittel gemäß Anspruch 3; oder enthaltend ein oder mehrere Reaktionsprodukte erhältlich nach einem Verfahren gemäß einem der Ansprüche 4 bis 7; sowie Pigmente und/oder Füllstoffe.

**11.** Zusammensetzung gemäß Anspruch 10, wobei die Zusammensetzung bei 25°C flüssig ist.

**12.** Zusammensetzung gemäß einem der Ansprüche 10 oder 11, wobei es sich bei der Zusammensetzung um ein Beschichtungsmittel, eine Formmasse, eine Paste, eine Tinte oder ein Kosmetikum handelt.

**13.** Zusammensetzung gemäß einem der Ansprüche 10 bis 12, wobei der Polyether der Formel (I), das Netz- und Dispergiermittel oder das Reaktionsproduktgemäß einem der Verfahren nach Ansprüchen 4 bis 7 in einer Menge von 0,1 bis 10 Gew.-% bezogen auf das Gesamtgewicht der Zusammensetzung enthalten ist.

**14.** Zusammensetzung gemäß einem der Ansprüche 10 bis 13 wobei es sich bei der Zusammensetzung um ein Sheet-Molding-Compound oder ein Bulk-Molding-Compound handelt.

**15.** Zusammensetzung gemäß einem der Ansprüche 10 bis 14, wobei die Zusammensetzung einen oder mehrere Füllstoffe gewählt aus der Gruppe bestehend aus Aluminiumtrihydroxid, Kreide, Ton, Bariumsulfat, und Magnesiumhydroxid enthält.

## Claims

**1.** Polyethers of the general formula (I):

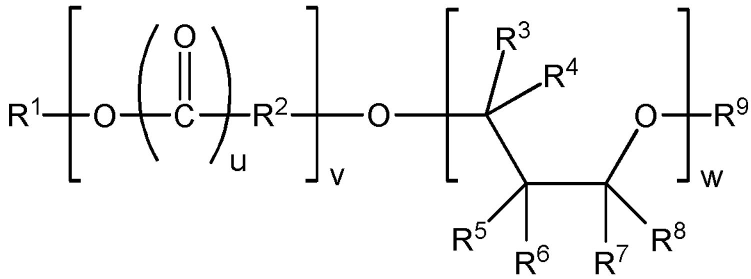

(I)

in which

u is 0 or 1,
v is 1 to 60,
w is 1 to 20,
$R^1$ is a monovalent organic radical having 1 to 100 carbon atoms,
$R^2$ is a divalent organic radical, and which
if u = 0 is $CHR^{2a}CHR^{2b}$, wherein
$R^{2a}$ and $R^{2b}$ independently of one another are
hydrogen, or

monovalent organic radicals selected from the group consisting of
aliphatic radicals having 1 to 8 carbon atoms, aromatic radicals having 6 to 8 carbon atoms, or araliphatic radicals having 7 to 10 carbon atoms; and which
if u = 1 is an aliphatic radical having 2 to 24 carbon atoms;
$R^3$, $R^4$, $R^7$ and $R^8$ independently of one another are
hydrogen, or
monovalent organic radicals and are selected from the group consisting of
aliphatic radicals having 1 to 8 carbon atoms, aromatic radicals having 6 to 8 carbon atoms, or araliphatic radicals having 7 to 10 carbon atoms,
$R^5$ is a radical $R^{5a}$ or $R^{5b}$, and

$R^{5a}$ is a monovalent organic radical and which is selected from the group consisting of
aliphatic radicals having 1 to 20 carbon atoms, aromatic radicals having 6 to 12 carbon atoms, araliphatic radicals having 7 to 24 carbon atoms,
$R^{5b}$ is a radical $CH_2$-O-$R^{5c}$, in which $R^{5c}$ is hydrogen or
a monovalent organic radical which contains one or more hydroxyl groups and which is selected from the group consisting of
aliphatic radicals having 1 to 24 carbon atoms, aromatic radicals having 6 to 14 carbon atoms, and araliphatic radicals having 7 to 18 carbon atoms,
$R^6$ is hydrogen or a radical $R^{5a}$,
$R^9$ is defined like $R^{5c}$ and is selected independently of $R^{5c}$; and

wherein

(a) the radicals $R^1$, $R^2$, $R^3$, $R^4$, $R^{5a}$, $R^6$, $R^7$ and $R^8$ are free of carboxyl, hydroxyl, thiol, imino and also primary and secondary amino groups,
(b) 10 to 100 mol% of the hydroxyl groups introduced via the above radicals $R^{5b}$
and $R^9$ and/or formed by elimination of hydrolytically eliminable radicals have been replaced by radicals OT selected from the group consisting of

radicals $-O-P(O)(OH)_{2-x}(O^{\ominus}Z^{\oplus})_x$, in which x is 0, 1 or 2,
radicals $-O-S(O_2)(OH)_{1-y}(O^{\ominus}Z^{\oplus})_y$, in which y is 0 or 1, and
radicals $-O-(C{=}O)_s-(NH)_t-T^a$, in which s is 0 or 1 and t is 0 or 1 and, if s = 0, t also = 0, and in which $T^a$ is a monovalent organic radical having 1 to 100 carbon atoms which optionally comprises one or more of the following radicals
COOH,
$COO^{\ominus}Z^{\oplus}$,
$-O-P(O)(OH)_{2-x}(O^{\ominus}Z^{\oplus})_x$ and
$-O-S(O_2)(OH)_{1-y}(O^{\ominus}Z^{\oplus})_y$,

and the above radicals $Z^{\oplus}$ independently of one another are alkali metal cations, an ammonium ion or protonated or quaternized amines,
and
(c) at least one of the radicals OT comprises or consists of at least one of the radicals
$-O-P(O)(OH)_{2-x}(O^{\ominus}Z^{\oplus})_x$ or $-O-S(O_2)(OH)_{1-y}(O^{\ominus}Z^{\oplus})_y$.

**2.** Polyethers according to Claim 1, in which

u is 0 or 1,
v is 2 to 45,
$R^1$ is a monovalent aliphatic radical having 1 to 50 carbon atoms or an aromatic radical having 6 to 10 carbon atoms,
u is 0 or 1,
$R^2$ if u = 0 is $CHR^{2a}CHR^{2b}$, wherein
$R^{2a}$ and $R^{2b}$ independently of one another are
hydrogen or an aliphatic radical having 1 to 4 carbon atoms; and which
if u = 1 is an aliphatic radical having 4 to 6 carbon atoms;
$R^3$, $R^4$, $R^7$ and $R^8$ are hydrogen;

$R^5$ is a radical $R^{5a}$ or $R^{5b}$, and

$R^{5a}$ is a radical $CH_2$-O-$R^{5d}$, in which $R^{5d}$ is a linear alkyl radical having 2 to 10 carbon atoms, a branched or cyclic alkyl radical having 4 to 10 carbon atoms, an aryl radical having 6 to 10 carbon atoms, an arylalkyl radical having 7 to 14 carbon atoms or an alkylaryl radical having 7 to 14 carbon atoms, and
$R^{5b}$ is a radical $CH_2$-O-$R^{5c}$, in which $R^{5c}$ is hydrogen or
a monovalent organic radical which contains one or more hydroxyl groups and which is selected from the group consisting of
aliphatic radicals having 1 to 24 carbon atoms;

$R^6$ is hydrogen or an alkyl radical having 1 to 6 carbon atoms;
$R^9$ is defined like $R^{5c}$ and is selected independently of $R^{5c}$; and

wherein
10 to 100 mol% of the hydroxyl groups formed via the above radicals $R^{5b}$ and $R^9$ or formed by elimination of hydrolytically eliminable radicals have been replaced by radicals OT which are selected from the group consisting of radicals $-O-P(O)(OH)_{2-x}(O^{\ominus}Z^{\oplus})_x$ and
radicals $-O-(C=O)_s-(NH)_t-T^a$, in which
$T^a$ is a monovalent organic radical having 1 to 100 carbon atoms and which comprises at least one radical $O-P(O)(OH)_{2-x}(O^{\ominus})Z^{\oplus})_x$; and
x is 0, 1 or 2, and
s is 0 or 1 and t is 0 or 1, and if s = 0 then t also = 0, and
the cations $Z^{\oplus}$) independently of one another are alkali metal cations, an ammonium ion or protonated or quaternized amines.

3. Wetting agents and/or dispersants comprising or consisting of polyethers of the formula (I) as defined in Claims 1 and 2.

4. Process for preparing the polyethers of Claims 1 or 2 or the wetting agents and/or dispersants of Claim 3, wherein one or more monoalcohols of the general formula (III)

$R^1$-OH (III)

are reacted with one or more species of the general formulae (IV), (V) and (Vb)

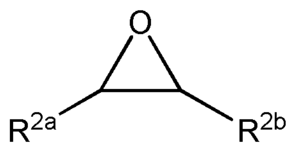

(IV)

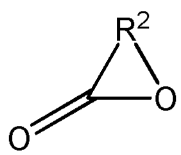

(V)

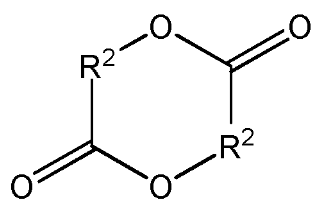

(Vb)

in a ring-opening reaction or with one or more of the species of the general formula (Va)

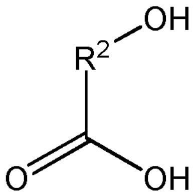

(Va)

in a condensation reaction to give species of the general formula (VI):

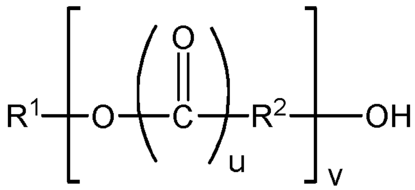

(VI)

wherein when using one or more of the species of the general formula (IV) u = 0 and when using one or more species of the general formulae (V), (Va) or (Vb) u = 1,
and wherein the species of the general formula (VI) are reacted with one or more species of the general formula (VII)

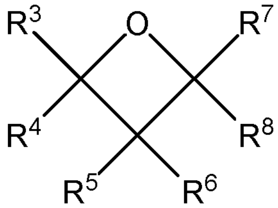

(VII)

in a ring-opening reaction, and
10 to 100 mol% of the hydroxyl groups formed via the radicals $R^5$ and $R^9$ and/or formed by elimination of hydrolytically eliminable radicals

(i) are converted by phosphorylation and, in the case of x = 1 or 2, by subsequent salification into radicals $-O-P(O)(OH)_{2-x}(O^{\ominus}Z^{\oplus})_x$, and/or
(ii) are converted by sulfonylation in the case of y = 1 by subsequent salification into radicals $-O-S(O_2)(OH)_{1-y}(O^{\ominus}Z^{\oplus})_y$, and/or
(iii) are reacted with dicarboxylic or polycarboxylic acids, their anhydrides or halides, as a result of which the radical $T^a$ comprises one or more COOH radicals, which are optionally converted by salification into radicals $COO^{\ominus}Z^{\oplus}$,
(iv) are reacted with one or more of the species of the formulae (IV), (V), (Va) and (Vb) and then are optionally subjected to the phosphorylation (i) and/or sulfonylation (ii) or to the reaction (iii), and/or
(v) are converted by addition reaction with monoisocyanates of the formula $T^a$-NCO into radicals $-O-(C=O)_s-(NH)_t-T^a$, in which s = t = 1, and

wherein
the radicals $R^1$, $R^2$, $R^{2a}$, $R^{2b}$, $R^3$, $R^4$, $R^5$, $R^6$, $R^7$, $R^8$, $T^a$ and $Z^{\oplus}$ and the indices u, v and x, y are defined as in Claims 1 and 2.

**5.** Process according to Claim 4, wherein

a. species of the formula (VII) used are exclusively those in which all radicals $R^5$ are radicals $R^{5a}$ or in which all radicals $R^5$ are radicals $R^{5b}$; or wherein
b. species of the formula (VII) used comprise a mixture of species having radicals $R^{5a}$ and species having radicals $R^{5b}$; and

the radicals $R^{5a}$ and $R^{5b}$ are defined as in Claim 1 or 2.

6. Process according to Claim 5, wherein the radical $R^{5b}$ contains one or more hydroxyl groups and/or one or more ether oxygen atoms.

7. Process according to Claim 6, wherein the radical $R^{5b}$ contains a plurality of ether oxygen atoms which are connected by 2 or 3 carbon atoms in the shortest chain to a further ether oxygen atom or to a hydroxyl group, and hydroxyl groups present have optionally been subjected partially or completely to one or more of the reactions/conversions (i), (ii), (iii), (iv) and (v) as set forth in Claim 4.

8. Use of one or more of the polyethers of the general formula (I) according to one of Claims 1 or 2, or of one or more of the reaction products as set forth in any of Claims 4 to 7, as wetting agents and dispersants for particulate solids in compositions comprising the latter.

9. Use according to Claim 8, wherein the particulate solids are pigments and/or fillers.

10. Composition comprising one or more of the polyethers of the general formula (I) according to either of Claims 1 or 2; or comprising one or more wetting agents and/or dispersants according to Claim 3; or comprising one or more reaction products obtainable by a process according to any of Claims 4 to 7; and also pigments and/or fillers.

11. Composition according to Claim 10, wherein the composition is liquid at 25°C.

12. Composition according to one of Claims 10 or 11, wherein the composition is a coating material, a molding compound, a paste, an ink or a cosmetic.

13. Composition according to any of Claims 10 to 12, wherein the polyether of the formula (I), the wetting agent and dispersant or the reaction product as set forth in any of the processes according to Claims 4 to 7 is present in an amount of 0.1 to 10 wt%, based on the total weight of the composition.

14. Composition according to any of Claims 10 to 13, wherein the composition is a sheet molding compound or a bulk molding compound.

15. Composition according to any of Claims 10 to 14, wherein the composition comprises one or more fillers selected from the group consisting of aluminum trihydroxide, chalk, clay, barium sulfate, and magnesium hydroxide.

## Revendications

1. Polyéther de la formule générale (I) :

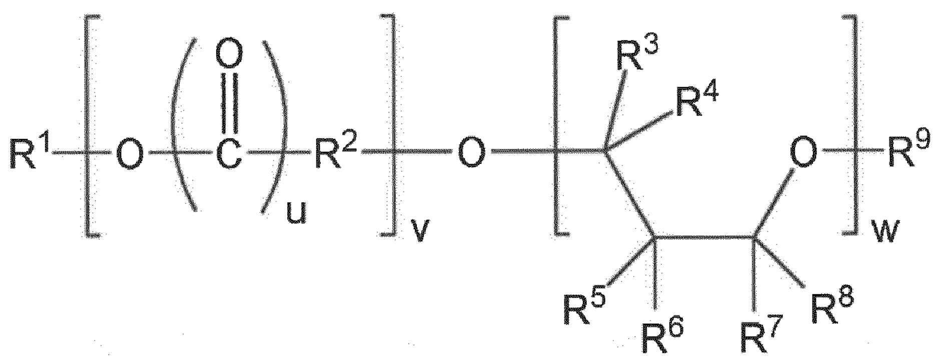

(I)

dans lequel

u représente 0 ou 1,

v représente 1 à 60,
w représente 1 à 20,
$R^1$ représente un radical organique monovalent de 1 à 100 atomes de carbone,
$R^2$ représente un radical organique bivalent, et qui
lorsque u = 0, représente $CHR^{2a}CHR^{2b}$,
$R^{2a}$ et $R^{2b}$ représentant indépendamment l'un de l'autre l'hydrogène ou
des radicaux organiques monovalents choisis dans le groupe constitué par :

les radicaux aliphatiques de 1 à 8 atomes de carbone,
les radicaux aromatiques de 6 à 8 atomes de carbone, ou
les radicaux araliphatiques de 7 à 10 atomes de carbone ; et qui

lorsque u = 1, représente un radical aliphatique de 2 à 24 atomes de carbone ;
$R^3$, $R^4$, $R^7$ et $R^8$ représentent indépendamment les uns des autres l'hydrogène ou
des radicaux organique monovalents et sont choisis dans le groupe constitué par :

les radicaux aliphatiques de 1 à 8 atomes de carbone,
les radicaux aromatiques de 6 à 8 atomes de carbone, ou
les radicaux araliphatiques de 7 à 10 atomes de carbone,

$R^5$ représente un radical $R^{5a}$ ou $R^{5b}$, et
$R^{5a}$ représente
un radical organique monovalent et qui est choisi dans le groupe constitué par :

les radicaux aliphatiques de 1 à 20 atomes de carbone,
les radicaux aromatiques de 6 à 12 atomes de carbone,
les radicaux araliphatiques de 7 à 24 atomes de carbone,

$R^{5b}$ représente
un radical $CH_2$-O-$R^{5c}$, dans lequel $R^{5c}$ représente l'hydrogène ou
un radical organique monovalent contenant un ou plusieurs groupes hydroxyle et qui est choisi dans le groupe constitué par :

les radicaux aliphatiques de 1 à 24 atomes de carbone,
les radicaux aromatiques de 6 à 14 atomes de carbone, et
les radicaux araliphatiques de 7 à 18 atomes de carbone,

$R^6$ représente l'hydrogène ou un radical $R^{5a}$,
$R^9$ est défini comme $R^{5c}$ et est choisi indépendamment de $R^{5c}$ ; et dans lequel

(a) les radicaux $R^1$, $R^2$, $R^3$, $R^4$, $R^{5a}$, $R^6$, $R^7$ et $R^8$ sont exempts de groupes carboxy, hydroxy, thiol, imino, ainsi que de groupes amino primaires et secondaires,
(b) 10 à 100 % en moles des groupes hydroxyle introduits par les radicaux $R^{5b}$ et $R^9$ précédents et/ou formés par clivage de radicaux clivables par voie hydrolytique sont remplacés par des radicaux OT, qui sont choisis dans le groupe constitué par :

les radicaux $-O-P(O)(OH)_{2-x}(O^{\ominus}Z^{\oplus})_x$, dans lesquels x représente 0, 1 ou 2,
les radicaux $-O-S(O_2)(OH)_{1-y}(O^{\ominus}Z^{\oplus})_y$, dans lesquels y représente 0 ou 1, et
les radicaux $-O-(C{=}O)_s-(NH)_t-T^a$, dans lesquels s représente 0 ou 1 et t représente 0 ou 1 et, dans le cas où s = 0, alors t = 0, et dans lesquels $T^a$ représente un radical organique monovalent de 1 à 100 atomes de carbone, qui contient éventuellement un ou plusieurs des radicaux suivants :

COOH,
$COO^{\ominus}Z^{\oplus}$,
$-O-P(O)(OH)_{2-x}(O^{\ominus}Z^{\oplus})_x$, et
$-O-S(O_2)(OH)_{1-y}(O^{\ominus}Z^{®})_y$,
et les radicaux $Z^{\oplus}$ précédents représentent indépendamment les uns des autres des cations de métaux alcalins, un ion ammonium ou des amines protonées ou quaternisées, et

(c) au moins un des radicaux OT contient au moins un des radicaux $-O-P(O)(OH)_{2-x}(O^{\ominus}Z^{\oplus})_x$ ou $-O-S(O_2)(OH)_{1-y}(O^{\ominus}Z^{\oplus})_y$, ou est constitué par celui-ci.

**2.** Polyéther selon la revendication 1, dans lequel
u représente 0 ou 1,
v représente 2 à 45,
$R^1$ représente un radical aliphatique monovalent de 1 à 50 atomes de carbone ou un radical aromatique de 6 à 10 atomes de carbone,
u représente 0 ou 1,
$R^2$ lorsque u = 0, représente $CHR^{2a}CHR^{2b}$,
$R^{2a}$ et $R^{2b}$ représentant indépendamment l'un de l'autre l'hydrogène ou un radical aliphatique de 1 à 4 atomes de carbone ; et qui
lorsque u = 1, représente un radical aliphatique de 4 à 6 atomes de carbone ;
$R^3$, $R^4$, $R^7$ et $R^8$
représentent l'hydrogène ;
$R^5$ représente un radical $R^{5a}$ ou $R^{5b}$, et
$R^{5a}$ représente un radical $CH_2-O-R^{5d}$,
dans lequel $R^{5d}$ représente un radical alkyle linéaire de 2 à 10 atomes de carbone, un radical alkyle ramifié ou cyclique de 4 à 10 atomes de carbone, un radical aryle de 6 à 10 atomes de carbone, un radical arylalkyle de 7 à 14 atomes de carbone ou un radical alkylaryle de 7 à 14 atomes de carbone, et
$R^{5b}$ représente un radical $CH_2-O-R^{5c}$, dans lequel $R^{5c}$ représente l'hydrogène ou
un radical organique monovalent contenant un ou plusieurs groupes hydroxyle et qui est choisi dans le groupe constitué par :
les radicaux aliphatiques de 1 à 24 atomes de carbone ;
$R^6$ représente l'hydrogène ou un radical alkyle de 1 à 6 atomes de carbone ;
$R^9$ est défini comme $R^{5c}$ et est choisi indépendamment de $R^{5c}$ ; et dans lequel 10 à 100 % en moles des groupes hydroxyle formés par l'intermédiaire des radicaux $R^{5b}$ et $R^9$ précédents et/ou par clivage de radicaux clivables par voie hydrolytique sont remplacés par des radicaux OT, qui sont choisis dans le groupe constitué par :

les radicaux $-O-P(O)(OH)_{2-x}(O^{\ominus}Z^{\oplus})_x$, et
les radicaux $-O-(C=O)_s-(NH)_t-T^a$, dans lesquels
$T^a$ représente un radical organique monovalent de 1 à 100 atomes de carbone et qui contient au moins un radical $O-P(O)(OH)_{2-x}(O^{\ominus}Z^{\oplus})_x$; et
x représente 0, 1 ou 2, et
s représente 0 ou 1 et t représente 0 ou 1 et, dans le cas où s = 0, alors t = 0, et
les cations $Z^{\oplus}$ représentent indépendamment les uns des autres des cations de métaux alcalins, un ion ammonium ou des amines protonées ou quaternisées.

**3.** Agent mouillant et/ou dispersant contenant ou constitué par des polyéthers de la formule (I) tels que définis dans les revendications 1 et 2.

**4.** Procédé de fabrication des polyéthers des revendications 1 ou 2 ou des agents mouillants et/ou dispersants de la revendication 3, dans lequel un ou plusieurs monoalcools de la formule générale (III) :

$$R^1\text{-}OH \qquad (III)$$

sont mis en réaction avec une ou plusieurs espèces des formules générales (IV), (V) et (Vb) :

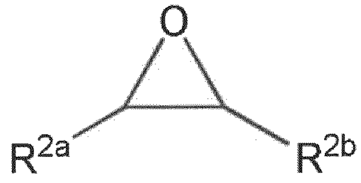

(IV)

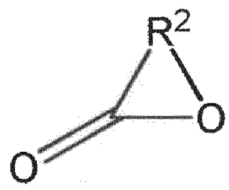

(V)

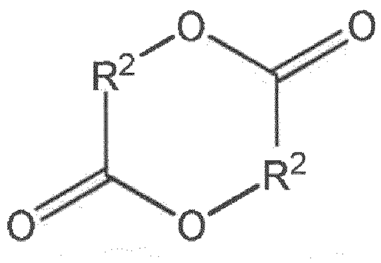

(Vb)

avec réaction par ouverture de cycle ou une ou plusieurs des espèces de la formule générale (Va) :

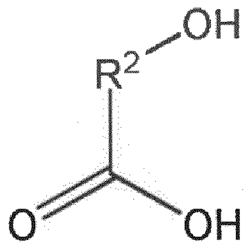

(Va)

dans une réaction de condensation pour former des espèces de la formule générale (VI) :

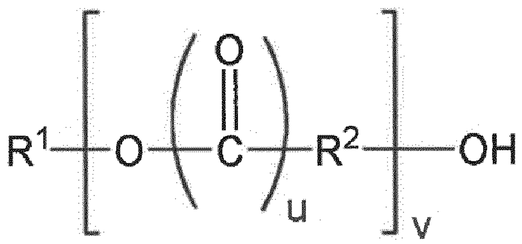

(VI)

lors de l'utilisation d'une ou de plusieurs des espèces de la formule générale (IV), u = 0 et, lors de l'utilisation d'une ou de plusieurs espèces des formules générales (V), (Va) ou (Vb), u = 1,
et les espèces de la formule générale (VI) sont mises en réaction avec une ou plusieurs espèces de la formule générale (VII) :

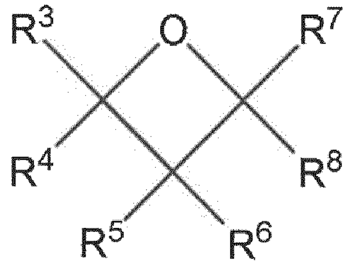

(VII)

avec réaction par ouverture de cycle, et
10 à 100 % en moles des groupes hydroxyle formés par l'intermédiaire des radicaux $R^5$ et $R^9$ et/ou par clivage de radicaux clivables par voie hydrolytique

(i) sont mis en réaction par phosphorylation et, dans le cas où x = 1 ou 2, par salinisation ultérieure pour former des radicaux $-O-P(O)(OH)_{2-x}(O^{\ominus}Z^{\oplus})_x$, et/ou
(ii) sont mis en réaction par sulfonation, dans le cas où y = 1, par salinisation ultérieure pour former des radicaux $-O-S(O_2)(OH)_{1-y}(O^{\ominus}Z^{\oplus})_y$, et/ou
(iii) sont mis en réaction avec des acides di- ou polycarboxyliques, leurs anhydrides ou halogénures, le radical $T^a$ contenant ainsi un ou plusieurs radicaux COOH, qui sont éventuellement transformés par salinisation en des radicaux $COO^{\ominus}Z^{\oplus}$,
(iv) sont mis en réaction avec une ou plusieurs des espèces des formules (IV), (V), (Va) et (Vb), puis éventuellement soumis à la phosphorylation (i) et/ou à la sulfonation (ii) ou à la réaction (iii),
et/ou
(v) sont mis en réaction par réaction d'addition avec des monoisocyanates de la formule $T^a$-NCO pour former des radicaux $-O-(C=O)_s-(NH)_t-T^a$, dans lesquels s = t = 1, et
dans lequel
les radicaux $R^1$, $R^2$, $R^{2a}$, $R^{2b}$, $R^3$, $R^4$, $R^5$, $R^6$, $R^7$, $R^8$, $T^a$ $Z^{\oplus}$ et les indices u, v et x, y sont tels que définis dans les revendications 1 ou 2.

5. Procédé selon la revendication 4, dans lequel

a. en tant qu'espèces de la formule (VII), exclusivement celles dans lesquelles tous les radicaux $R^5$ représentent des radicaux $R^{5a}$ ou dans lesquelles tous les radicaux $R^5$ représentent des radicaux $R^{5b}$; ou dans lequel
b. en tant qu'espèces de la formule (VII), un mélange d'espèces contenant des radicaux $R^{5a}$ et d'espèces contenant des radicaux $R^{5b}$ est utilisé ; et
les radicaux $R^{5a}$ et $R^{5b}$ sont tels que définis dans la revendication 1 ou 2.

6. Procédé selon la revendication 5, dans lequel le radical $R^{5b}$ contient un ou plusieurs groupes hydroxyle et/ou un ou plusieurs atomes d'oxygène d'éther.

7. Procédé selon la revendication 6, dans lequel le radical $R^{5b}$ contient plusieurs atomes d'oxygène d'éther, qui sont reliés par 2 ou 3 atomes de carbone dans la chaîne la plus courte avec un atome d'oxygène d'éther supplémentaire ou un groupe hydroxyle, et les groupes hydroxyle contenus ont éventuellement été soumis en partie ou en totalité à une ou plusieurs des réactions (i), (ii), (iii), (iv) et (v) selon la revendication 4.

8. Utilisation d'un ou de plusieurs des polyéthers de la formule générale (I) selon l'une quelconque des revendications 1 ou 2 ou d'un ou de plusieurs des produits de réaction selon l'une quelconque des revendications 4 à 7 en tant qu'agents mouillants et dispersants pour des solides particulaires dans des compositions qui contiennent ceux-ci.

9. Utilisation selon la revendication 8, dans laquelle les solides particulaires consistent en des pigments et/ou des charges.

10. Composition contenant un ou plusieurs des polyéthers de la formule générale (I) selon l'une quelconque des revendications 1 ou 2 ; ou contenant un ou plusieurs agents mouillants et/ou dispersants selon la revendication 3 ; ou contenant un ou plusieurs produits de réaction pouvant être obtenus par un procédé selon l'une quelconque des revendications 4 à 7 ; ainsi que des pigments et/ou des charges.

11. Composition selon la revendication 10, dans laquelle la composition est liquide à 25 °C.

12. Composition selon l'une quelconque des revendications 10 ou 11, dans laquelle la composition consiste en un agent de revêtement, un matériau de moulage, une pâte, une encre ou un cosmétique.

13. Composition selon l'une quelconque des revendications 10 à 12, dans laquelle le polyéther de la formule (I), l'agent mouillant et dispersant ou le produit de réaction d'un des procédés selon les revendications 4 à 7 est contenu en une quantité de 0,1 à 10 % en poids, par rapport au poids total de la composition.

14. Composition selon l'une quelconque des revendications 10 à 13, dans laquelle la composition consiste en un

composé de moulage en feuille ou un composé de moulage en masse.

**15.** Composition selon l'une quelconque des revendications 10 à 14, dans laquelle la composition contient une ou plusieurs charges choisies dans le groupe constitué par le trihydroxyde d'aluminium, la craie, l'argile, le sulfate de baryum et l'hydroxyde de magnésium.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2011257326 A1
- US 8258189 B2
- US 5130463 A
- US 20130289195 A1
- CN 106084203 A
- WO 2002040572 A1
- EP 0270126 A
- DE 3643007
- US 2013289195 A1
- EP 417490 B1

### In der Beschreibung aufgeführte Nicht-Patentliteratur

- *Adv. Mater.,* 1998, vol. 10, 1215-1218
- aliphatic compounds. *Pure & Appl. Chem.,* 1995, vol. 67 (8/9), 1307-1375, 1313
- *Journal of Polymer Science: Part A: Polymer Chemistry,* 2001, vol. 39, 955-963
- Weitere Beispiele für organische Pigmente finden sich in der Monographie. **W. HERBST ; K. HUNGER.** Industrial Organic Pigments. Wiley-VCH, 1997
- Weitere Beispiele sind in der Monographie. **G. BUXBAUM.** Industrial Inorganic Pigments. Wiley-VCH, 1998
- **VON P.F. BRUINS.** Unsaturated Polyester Technology. Gordon and Breach Science Publishers, 1976, 211-238